(19) Europäisches Patentamt
European Patent Office
Office européen des brevets

(11) **EP 1 807 634 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: **04822186.5**

(22) Anmeldetag: **02.11.2004**

(51) Int Cl.:
**F16D 3/224** *(2011.01)*

(86) Internationale Anmeldenummer:
**PCT/EP2004/012380**

(87) Internationale Veröffentlichungsnummer:
**WO 2006/048032 (11.05.2006 Gazette 2006/19)**

(54) **GEGENBAHNGELENK MIT BAHNWENDEPUNKT**

COUNTER TRACK JOINT HAVING A TRACK INFLECTION POINT

JOINT A CHEMINS DE ROULEMENTS CONJUGUES PRESENTANT UN POINT D'INFLEXION DE CHEMIN DE ROULEMENT

(84) Benannte Vertragsstaaten:
**AT BE BG CH CY CZ DE DK EE ES FI FR GB GR HU IE IS IT LI LU MC NL PL PT RO SE SI SK TR**

(43) Veröffentlichungstag der Anmeldung:
**18.07.2007 Patentblatt 2007/29**

(60) Teilanmeldung:
**10171417.8 / 2 239 477**

(73) Patentinhaber: **GKN Driveline International GmbH 53797 Lohmar (DE)**

(72) Erfinder: **WECKERLING, Thomas 53115 Bonn (DE)**

(74) Vertreter: **Neumann, Ernst Dieter et al Neumann Müller Oberwalleney & Partner Patentanwälte Overstolzenstrasse 2a 50677 Köln (DE)**

(56) Entgegenhaltungen:
**DE-A1- 10 304 156     DE-A1- 10 337 612**

**Beschreibung**

Die Erfindung betrifft ein Gegenbahngelenk als Festgelenk mit den Merkmalen
ein Gelenkaußenteil, welches eine erste Längsachse und axial zueinander entgegengesetzt eine Anschlußseite und eine Öffnungsseite hat, und das erste äußere Kugelbahnen und zweite äußere Kugelbahnen aufweist
ein Gelenkinnenteil, welches eine zweite Längsachse und Anschlußmittel für eine zur Öffnungsseite des Gelenkaußenteils weisende Welle hat und das erste innere Kugelbahnen und zweite innere Kugelbahnen aufweist,
die ersten äußeren Kugelbahnen und die ersten inneren Kugelbahnen bilden erste Bahnpaare miteinander,
die zweiten äußeren Kugelbahnen und die zweiten inneren Kugelbahnen bilden zweite Bahnpaare miteinander, die Bahnpaare nehmen jeweils eine drehmomentübertragende Kugel auf,
ein Kugelkäfig sitzt zwischen Gelenkaußenteil und Gelenkinnenteil und weist umfangsverteilte Käfigfenster auf, die jeweils zumindest eine der Kugeln aufnehmen, der Öffnungswinkel der ersten Bahnpaare öffnet sich bei gestrecktem Gelenk in der Gelenkmittelebene von der Öffnungsseite zur Anschlußseite des Gelenkaußenteils, der Öffnungswinkel der zweiten Bahnpaare öffnet sich bei gestrecktem Gelenk in der Gelenkmittelebene von der Anschlußseite zur Öffnungsseite des Gelenkaußenteils.

Gegenbahngelenke der vorstehend genannten Art sind grundsätzlich aus der DE 102 20 711 A1 bekannt, wobei Gelenke mit 6 Kugeln und mit 8 Kugeln gezeigt sind. Hierbei entspricht der Typ der Kugelbahnen dem an sich aus Rzeppa-Gelenken (RF-Gelenken) sowie aus Undercut Free-Gelenken (UF-Gelenken) bekannten Typ. Das heißt, die Mittellinien der Kugelbahnen bestehen aus einheitlichen Radien (RF-Gelenk) bzw. setzen sich aus Radien und anschließenden achsparallelen Geraden (UF-Gelenk) zusammen. Bei den beschriebenen Gegenbahngelenken wechselt sich hierbei die axiale Öffnungsrichtung der Bahnpaare über dem Umfang ab, was zum Typ des Gegenbahngelenks führt. Gegenbahngelenke dieser Art haben den Nachteil, daß der Beugewinkel auf etwa 45° beschränkt ist, weil bei Überschreiten dieses Beugewinkels eine erste Kugel in der Gelenkbeugeebene aus den ersten Bahnpaaren austritt.

Aus der DE 103 37 612 A1 sind Gegenbahngelenke bekannt, bei denen die Bahnmittellinien der ersten Bahnpaare, die einen Öffnungswinkel haben, dessen Öffnungsrichtung bei gestrecktem Gelenk zum Gelenkboden hin weist, so gestaltet sind, daß der Öffnungswinkel bei Beugung des Gelenks ab einem bestimmten Beugewinkel eine Umkehr seiner Öffnungsrichtung erfährt. Dies wird insbesondere dadurch verwirklicht, daß die Mittellinien der Kugelbahnen der ersten Bahnpaare S-förmig sind und somit jeweils einen Wendepunkt aufweisen.

Aus der DE 100 60 220 A1 sind unter anderem Gegenbahngelenke bekannt, bei denen die Mittellinien der ersten äußeren Kugelbahnen nahe der Gelenköffnung einen Wendepunkt aufweisen, so daß die Mittellinien der ersten äußeren Kugelbahnen S-förmig sind. Entsprechendes gilt aufgrund der Symmetriebedingung für die Mittellinien der ersten inneren Kugelbahnen des Gelenkinnenteils. Der Beugewinkel dieser Gegenbahngelenke kann auf diese Weise erhöht werden.

Für Gelenke der beiden zuletzt genannten Arten gilt, daß das grundlegende Prinzip von Gegenbahngelenken, nämlich abwechselnd entgegengesetzt gerichtete Bahnöffnungswinkel und damit abwechselnd entgegengesetzte Axialkräfte von den Kugeln auf den Kugelkäfig nur solange gilt, bis eine Kugel den Wendepunkt vom nach innen gekrümmten Bahnbereich zum nach außen weggekrümmten Bahnbereich erreicht. Ist der Beugewinkel erreicht, bei dem die Kugel diesen zweiten Bahnbereich der jeweiligen S-förmigen Bahnen einnimmt, sind die Bahnöffnungswinkel nicht mehr sämtlich über dem Umfang abwechselnd gerichtet und die Axialkräfte von den Kugeln auf den Kugelkäfig nicht mehr axial ausgeglichen. Das Gegenbahnprinzip ist somit nicht mehr gegeben und der Kugelkäfig muß sich axial am Gelenkaußenteil und/oder der Kugelnabe abstützen. Dies kann zu einer reduzierten Lebensdauer aufgrund der erhöhten inneren Reibung zwischen Kugelkäfig und Gelenkaußenteil bzw. Gelenkinnenteil führen.

Hiervon ausgehend ist es die Aufgabe der vorliegenden Erfindung, ausgehend vom eingangs genannten Stand der Technik, ein Festgelenk nach Art eines Gegenbahngelenks zu entwickeln, das vergrößerte maximale Beugewinkel darstellen kann und dabei eine erhöhte Lebensdauer aufweist.

Die Lösung hierfür besteht in einem Gelenk mit den Merkmalen
ein Gelenkaußenteil, welches eine erste Längsachse und axial zueinander entgegengesetzt eine Anschlußseite und eine Öffnungsseite hat und das erste äußere Kugelbahnen und zweite äußere Kugelbahnen aufweist;
ein Gelenkinnenteil, welches eine zweite Längsachse und Anschlußmittel für eine zur Öffnungsseite des Gelenkaußenteils weisende Welle hat und das erste innere Kugelbahnen und zweite innere Kugelbahnen aufweist;
die ersten äußeren Kugelbahnen und die ersten inneren Kugelbahnen bilden erste Bahnpaare miteinander;
die zweiten äußeren Kugelbahnen und die zweiten inneren Kugelbahnen bilden zweite Bahnpaare miteinander, die Bahnpaare nehmen jeweils eine drehmomentübertragende Kugel auf;
ein Kugelkäfig sitzt zwischen Gelenkaußenteil und Gelenkinnenteil und weist umfangsverteilte Käfigfenster auf, die jeweils zumindest eine der Kugeln aufnehmen; der Öffnungswinkel der ersten Bahnpaare öffnet sich bei gestrecktem Gelenk in der Gelenkmittelebene von der Öffnungsseite zur Anschlußseite des Gelenkaußenteils;
der Öffnungswinkel der zweiten Bahnpaare öffnet sich bei gestrecktem Gelenk in der Gelenkmittelebene von der Anschlußseite zur Öffnungsseite des Gelenkaußenteils; wobei die Mittellinien der ersten Bahnpaare jeweils einen Wendepunkt haben und der Mittelpunktswinkel β an den Wendepunkt bezogen auf die Gelenkmittelebene jeweils größer ist als 4°, wobei die Bahnmittellinien sich aus einem Radius, einer sich im Wendepunkt anschließenden Geraden und einem sich auf der Gegenseite an den Radius anschließenden kleineren Radius mit gleichem Krümmungssinn zusammensetzen. Hiermit ist sichergestellt, daß das Gelenk im Lebensdauerbetrieb als Gegenbahngelenk arbeitet. Als Lebensdauerbetrieb gilt ein solcher innerhalb des Lebensdauerwinkels, bei welchem die Auslegungslebensdauer des Gelenks unter wechselnder Last schadensfrei erreicht wird.

Dies bedeutet, daß im sogenannten Lebensdauerbereich das Prinzip des Gegenbahngelenks nicht verlassen wird, so daß die Lebensdauer erhöht wird. Der Lebensdauerbereich ist hierbei über den Lebensdauerwinkel $\beta_L$ definiert. Bei einem Betrieb innerhalb dieses Beugungswinkels erreicht das Gelenk definitionsgemäß die Auslegungslebensdauer. Gleichzeitig ist jedoch die weitere Gelenkbeugung möglich, so daß größere Beugewinkel darstellbar sind. Erfindungsgemäß ist nun der Übergang zum zweiten Bereich so definiert, daß er außerhalb des Bahnbereichs liegt, der von den Kugeln im Lebensdauerbereich in den Kugelbahnen überstrichen wird. Für die Lage des genannten Wendepunkts werden nachstehend bevorzugte Ausführungsbeispiele angegeben. Es ist hierbei darauf abzuheben, wie der Begriff Wendepunkt verwendet wird: zum einen im mathematisch zutreffenden Sinn eines Übergangs von einer Krümmung in eine Gegenkrümmung und zum anderen in mathematisch nicht exaktem Sinn für den Übergang von einer Krümmung in eine an die Krümmung tangential anschließende Gerade. Beides wird unter dem hier verwendeten Begriff "Wendepunkt" verstanden. Es wäre auch die Verwendung des Begriffs "Tangentenpunkt" möglich.

Nach einer ersten bevorzugten Ausführungsform ist vorgesehen, daß der Mittelpunktswinkel β an den Wendepunkt $P_{1-2}$ bezogen auf die Gelenkmittelebene E jeweils größer als 5° ist. Nach einer ergänzenden bevorzugten Ausführungsform ist vorgesehen, daß der Mittelpunktswinkel β an den Wendepunkt $P_{1-2}$ bezogen auf die Gelenkmittelebene E jeweils kleiner als 12° ist.

Weiterhin ist insbesondere vorgesehen, daß eine Tangente $T_{1-2}$ an die Bahnmittellinie der ersten Bahnpaare im Wendepunkt $P_{1-2}$ mit der jeweiligen Längsachse bzw. eine Senkrechte auf dieser Tangente $T_{1-2}$ mit der Gelenkmittelebene E einen Wendepunktwinkel α bildet, der mit

$$\alpha \ge \frac{\beta_L}{2} + \arcsin\left[\frac{O_2}{R_2} \cdot \sin\left(\frac{\beta_L}{2} + 90°\right)\right]$$

definiert ist, wobei $O_2$ der axiale Abstand des Schnittpunkts einer Senkrechten auf der Tangente $T_{1-2}$ mit der Längsmittelachse A und $R_2$ der Abstand dieses Schnittpunktes vom Wendepunkt $P_{1-2}$ darstellt.

Nach einer weiteren ersten speziellen Ausführung ist vorgesehen, daß der Wendepunktwinkel α mit

$$\alpha \ge \frac{\beta_L}{2} + \arcsin\left[\frac{O_2 + a \cdot \tan\left(\frac{\beta_L}{2}\right)}{R_2} \cdot \sin\left(\frac{\beta_L}{2} + 90°\right)\right]$$

definiert ist, wenn die jeweiligen Bahnmittellinien in der Gelenkmittelebene E und bis zum Wendepunkt $P_{1-2}$ einen Radius $R_2$ aufweist, dessen Mittelpunkt $M_2$ von der Gelenkmittelebene E den axialen Abstand $O_2$ und von der jeweiligen Längsachse den radialen Abstand a in Richtung zum Wendepunkt $P_{1-2}$ hat.

Eine hierzu alternative spezielle Ausführung besteht darin, daß der Wendepunktwinkel α mit

$$\alpha \ge \frac{\beta_L}{2} + \arcsin\left[\frac{O_2 - b \cdot \tan\left(\frac{\beta_L}{2}\right)}{R_2} \cdot \sin\left(\frac{\beta_L}{2} + 90°\right)\right]$$

3

definiert ist, wenn die jeweiligen Bahnmittellinie in der Gelenkmittelebene E und bis zum Wendepunkt $P_{1-2}$ einen Radius $R_2$ aufweist, dessen Mittelpunkt $M_2$ von der Gelenkmittelebene E den axialen Abstand $O_2$ und von der jeweiligen Längsachse A den radialen Abstand b in Richtung vom Wendepunkt $P_{1-2}$ weg hat.

Ein erfindungsgemäßes Gegenbahngelenk mit 8 Kugeln für einen Beugewinkel von 47 - 52° ist dann optimiert, wenn folgende Verhältnisse zwischen einzelnen Bemessungsgrößen eingehalten werden:

1,5 < PCDB / R1 < 1,9
1,8 < PCDB / R2 < 2,2
2,3 < PCDB / R3 < 2,7
2,1 < PCDB / R4 < 2,5
1,8 < PCDB / R5 < 2,2
12 < PCDB / O2 < 16
12 < PCDB / O5 < 16
0,6 < PCDB / OD < 0,8
2,1 < PCDB / L < 2,5
3,4 < PCDB / DB < 4,0
2,1 < PCDB / DS < 2,5
0,75 < PCDB / DCA < 1,05
0,85 < PCOB / DCI < 1,15
7,5 < PCDB / W < 11,5
2,8 < PCDB / L1 < 3,4
2,6 < PCDB / L2 < 3,2

In diesen Verhältnissen haben die benannten Größen die folgende Bedeutung:

PCDB: Teilkreisdurchmesser Kugeln
R1 : Außenteil Kugelbahnradius 1 (erste Kugelbahnen)
R2 : Außenteil Kugelbahnradius 2 (erste Kugelbahnen)
R3 : Außenteil Kugelbahnradius 3 (erste Kugelbahnen)
R4 : Außenteil Kugelbahnradius 4 (zweite Kugelbahnen)
R5 : Außenteil Kugelbahnradius 5 (zweite Kugelbahnen)
O2 : Außenteil Kugelbahnoffset für Bahn mit Öffnungswinkel zur Anschlußseite
O5 : Außenteil Kugelbahnoffset für Bahn mit Öffnungswinkel zur Öffnungsseite
OD : Außendurchmesser Außenteil
L : Länge Innenteil
DB : Kugeldurchmesser
PCDS: Teilkreisdurchmesser Wellenverzahnung
DCA: Käfig Außendurchmesser
DCI : Käfig Innendurchmesser
W : Käfig Stegbreite
L1 : Käfig Fensterlänge 1
L2 : Käfig Fensterlänge 2

Bevorzugte Ausführungsbeispiele der Erfindung sind in den Zeichnungen dargestellt und werden nachstehend beschrieben.

Figur 1 zeigt ein Gegenbahngelenk mit 6 Kugeln in einer ersten Ausführung

a) in Gesamtdarstellung im Längsschnitt
b) mit seinem Gelenkaußenteil als Einzelheit im Längsschnitt;

Figur 2 zeigt ein Gegenbahngelenk mit 6 Kugeln nach Figur 1

a) im Längsschnitt mit Vermaßungen
b) im Längsschnitt weiteren Vermaßungen
c) den Kugelkäfig in Abwicklung als Einzelheit;

Figur 3 zeigt ein Gegenbahngelenk mit 8 Kugeln ähnlich den Figuren 1 und 2

a) mit Vermaßungen im Längsschnitt
b) in abgewinkelter Position mit weiteren Vermaßungen
c) den Kugelkäfig in Abwicklung als Einzelheit;

Figur 4 zeigt ein Gelenk mit 6 Kugeln in einer zweiten Ausführung

a) in Gesamtdarstellung im Längsschnitt
b) das Gelenkaußenteil als Einzelheit im Längsschnitt
c) das Gelenkinnenteil als Einzelheit im Längsschnitt;

Figur 5 zeigt das Gelenkaußenteil eines Gelenks nach Figur 4 mit weiteren Vermaßungen im Längsschnitt;

Figur 6 zeigt das Gelenk nach den Figuren 4 und 5 mit weiteren Vermaßungen

a) im Längsschnitt durch das Gelenkaußenteil
b) im Querschnitt durch eine Kugelbahn
c) eine Bewertungstabelle;

Figur 7 zeigt das Gelenkaußenteil eines Gelenks in einer weiteren Ausführungsform im Längsschnitt mit Vermaßungen;

Figur 8 zeigt das Gelenkaußenteil eines Gelenks in einer weiteren Ausführungsform im Längsschnitt mit Vermaßungen;

Figur 9 zeigt ein 6-Kugel-Gegenbahngelenk mit Definition der Gegenbahnen

a) in axialer Ansicht
b) im Längsschnitt;

Figur 10 zeigt ein 6-Kugel-Gegenbahngelenk mit Definition der Gegenbahnen

a) in axialer Ansicht
b) im Längsschnitt;

Figur 11 zeigt ein 6-Kugel-Gegenbahngelenk mit Definition der Gegenbahnen

a) in axialer Ansicht
b) im Längsschnitt;

Figur 12 zeigt ein erfindungsgemäßes 6-Kugel-Gegenbahngelenk mit Definition der Bahnen

a) in axialer Ansicht
b) im Längsschnitt durch das Gelenk (RF-Bahn);

Figur 13 zeigt ein 8-Kugel-Gegenbahngelenk mit Definition der Gegenbahnen

a) in axialer Ansicht
b) in einem ersten Längsschnitt
c) in einem zweiten Längsschnitt;

Figur 14 zeigt ein 8-Kugel-Gegenbahngelenk

a) in axialer Ansicht
b) in einem ersten Längsschnitt
c) in einem zweiten Längsschnitt;

Figur 15 zeigt ein 8-Kugel-Gegenbahngelenk

a) in axialer Ansicht
b) in einem ersten Längsschnitt
c) in einem zweiten Längsschnitt;

Figur 16 zeigt ein erfindungsgemäßes 8-Kugel-Gegenbahngelenk

a) in axialer Ansicht
b) in einem ersten Längsschnitt
c) in einem zweiten Längsschnitt;

Figur 17 zeigt ein 6-Kugel-Gegenbahngelenk mit Definition der Bahnen und in weiteren Einzelheiten

a) das Gelenkaußenteil im Längsschnitt
b) eine Außenbahn im Längsschnitt
c) das Gelenkinnenteil im Längsschnitt
d) eine Innenbahn im Längsschnitt
e) eine Bewertungstabelle.

Figur 18 zeigt ein 8-Kugel-Gegenbahngelenk ähnlich Figur 13 mit Definition einzelner Kenngrößen

a) in axialer Ansicht
b) in einem ersten Längsschnitt
c) in einem zweiten Längsschnitt
d) im Querschnitt durch den Kugelkäfig;

Figur 19 zeigt ein 8-Kugel-Gegenbahngelenk ähnlich Figur 13 mit Definition der Bahnen

a) in axialer Ansicht
b) im Längsschnitt durch das Gelenkaußenteil
c) im Längsschnitt durch den Kugelkäfig;

Figur 20 zeigt eine erfindungsgemäße Einbausituation einer erfindungsgemäßen Gelenkwelle in einem Fahrzeug im Teillängsschnitt.

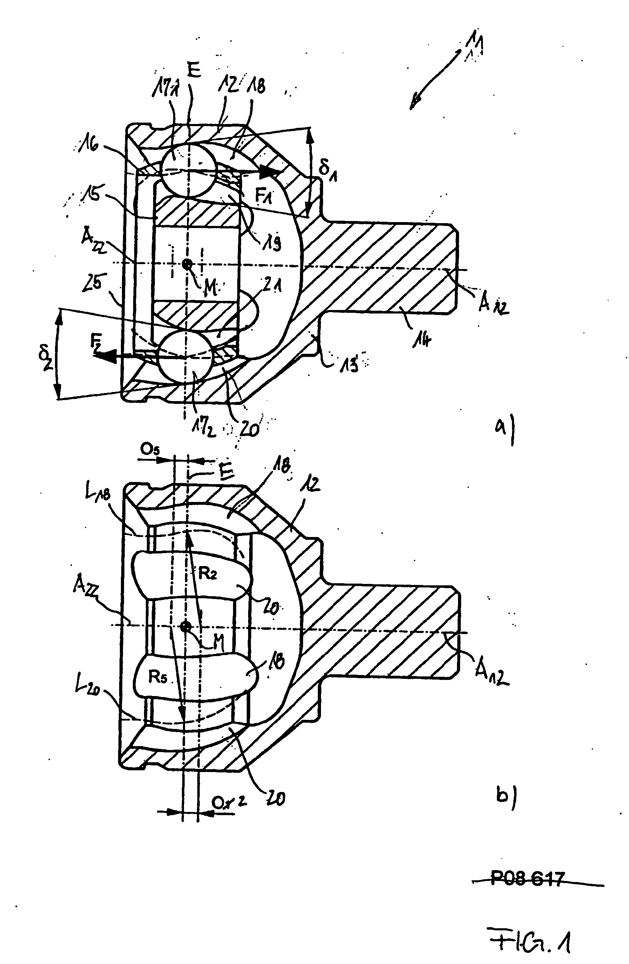

Die beiden Darstellungen der Figur 1 werden nachstehend gemeinsam beschrieben. Ein erfindungsgemäßes Gleichlaufgelenk 11 umfaßt ein Gelenkaußenteil 12 mit einer Öffnung 25 mit einem geschlossenen Boden 13 und einem einstückig angeschlossenen Zapfen 14. Das Gelenk umfaßt weiterhin ein Gelenkinnenteil 15, einen Kugelkäfig 16 sowie drehmomentübertragende Kugeln 17. Erste äußere Kugelbahnen 18 und erste innere Kugelbahnen 19 nehmen Kugeln $17_1$ auf und bilden erste Bahnpaare miteinander. Zweite äußere Kugelbahnen 20 und zweite innere Kugelbahnen 21 bilden zweite Bahnpaare miteinander, die zweite Kugeln $17_2$ aufnehmen. Die beiden Arten von Bahnpaaren sind über dem Umfang abwechselnd ausgebildet. Tangenten an die Kugeln in den Berührungspunkten mit den ersten Bahnpaaren, die eingezeichnet sind, bilden miteinander einen Öffnungswinkel $\delta_1$, der sich in Richtung zum Boden 13 öffnet. Tangenten an die zweiten Kugeln $17_2$ in den Berührungspunkten mit den zweiten Bahnpaaren bilden miteinander einen Öffnungs-winkel $\delta_2$, der sich zur Öffnung 21 des Gelenkaußenteils öffnet. Unter Drehmoment erzeugen diese Öffnungswinkel bei gestrecktem Gelenk Axialkräfte auf die Kugeln und damit auf den Kugelkäfig 16, die mit $F_1$ und $F_2$ bezeichnet sind. Eine Gelenkmittelebene E, die die Mittelpunkte der Kugeln aufnimmt, schneidet die Längsachse des Gelenks, die durch die Längsachsen $A_{12}$ des Gelenkaußenteils und $A_{22}$ des Gelenkinnenteils definiert ist, in einem Gelenkmittelpunkt M. Jeweils auf die Mittellinien $L_{18}$ der Kugelbahnen 18 im Gelenkaußenteil 12 bezogen, haben die Bahnen 18 in der Mittelebene einen Radius $R_2$, deren Mittelpunkt um einen axialen Offset $O_2$ auf der Achse A gegenüber dem Gelenkmittelpunkt M versetzt ist, während die Bahnen 20 einen gleich großen Radius $R_5$ haben, deren Mittelpunkt um ein Offset $O_5$ in entgegengesetzter Richtung gegenüber dem Gelenkmittelpunkt M versetzt ist.

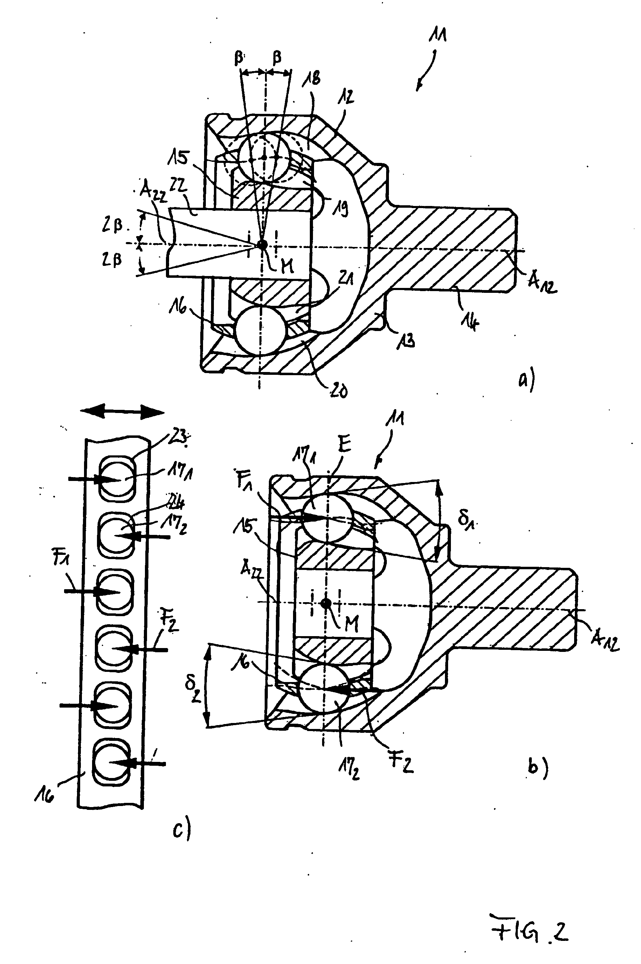

In Figur 2 sind gleiche Einzelheiten wie in Figur 1 mit gleichen Bezugsziffern versehen. In das Gelenkinnenteil 15 ist in Darstellung a eine Welle 22 eingesteckt. Außer der Längsachse $A_{12}$ des Gelenkaußenteils ist die Längsachse $A_{22}$ der Welle 22 bezeichnet, die in gleicher Weise der Längsachse des Gelenkinnenteils 15 entspricht. In Bezug auf die Längsachse $A_{22}$ sind nach beiden Seiten Lebensdauerwinkel $2\beta$ angetragen, die den maximalen Beugewinkel bezeichnen, unter dem das Gelenk schadensfrei im Lebensdauerversuch gefahren werden kann. Als Lebensdauerversuch ist hierbei ein Lastkollektiv zu verstehen, das dem praktischen Einsatz eines Gelenks während der Auslegungslebensdauer entspricht. Bei Beugung der Welle 22 gegenüber dem Gelenkaußenteil 12 in dem Winkel $2\beta$ zu beiden Seiten

machen die Kugeln $17_1$ in den erfindungsgemäßen Kugelbahnen 18, 19 Bewegungen längs der Bahnmittellinie, die durch die Winkel β zu beiden Seiten von der Gelenkmittelebene E aus definiert sind, wobei die Schenkel der Winkel von der Gelenkmittelebene E und Strahlen durch die Kugelmittelpunkte gebildet werden. In Darstellung c) ist der Kugelkäfig 16 in Abwicklung mit je drei umfangsverteilten Käfigfenstern 23, 24 erkennbar. Jeweils in ersten Bahnpaaren gehaltene Kugeln $17_1$ üben eine Axialkraft $F_1$ auf den Kugelkäfig aus; jeweils in zweiten Bahnpaaren gehaltene Kugeln $17_2$ üben eine Axialkraft $F_2$ auf den Kugelkäfig aus. Aufgrund der abwechselnden Verteilung von ersten und zweiten Bahnpaaren befindet sich der Kugelkäfig auch bei Drehmomentübertragung über das Gelenk in axialem Gleichgewicht.

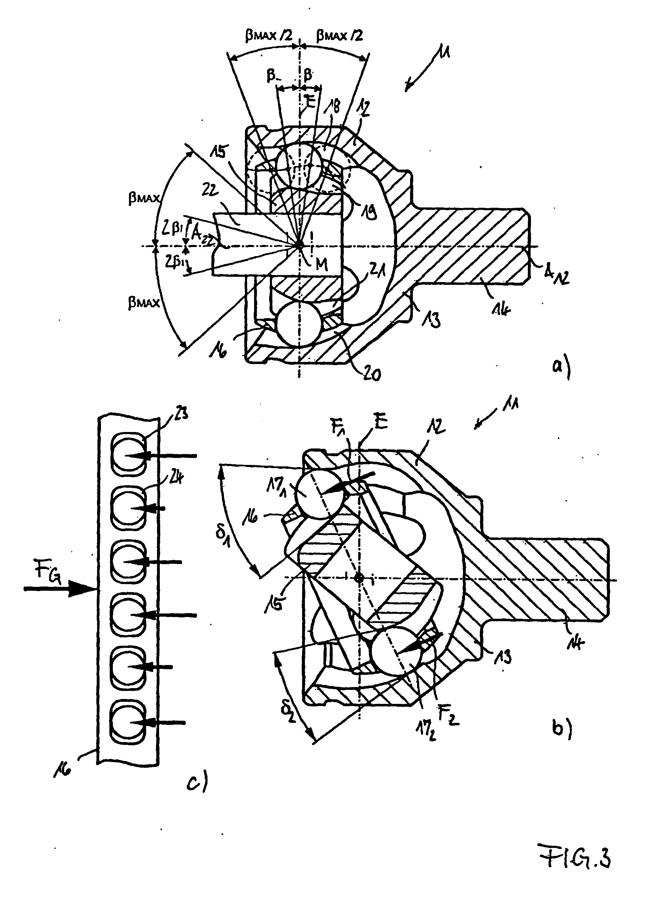

In Figur 3 ist in Darstellung a) in Bezug auf die Längsachse $A_{22}$ der Welle 22 zusätzlich zu dem Lebensdauerwinkel 2β beidseitig der maximale Beugewinkel $β_{max}$ angetragen. In Übereinstimmung hierzu sind in Bezug auf die Kugelmittelposition im Verhältnis zum Gelenkaußenteil wiederum die halben Lebensdauerwinkel β wie auch die halben maximalen Beugewinkel $β_{max/2}$ zu beiden Seiten von der Mittelebene E aus angetragen. Die Kugelpositionen im Gelenkaußenteil bei maximalem Beugewinkel $β_{max}$ sind jeweils mit gestrichelten Linien dargestellt.

In Darstellung b) ist der maximale Beugewinkel am Gelenk in einem Sinne eingetragen, in dem die Kugeln $17_1$ in den erfindungsgemäßen Bahnpaaren 18, 19 zur Öffnung 21 des Gelenkaußenteils 12 hin wandern. Aufgrund des S-förmigen Verlaufs der erfindungsgemäßen Kugelbahnen 18, 19 hat sich hierbei der Öffnungswinkel $δ_1$ zwischen den Tangenten an die Kugeln $17_1$ in den ersten Bahnpaaren im Richtungssinn umgekehrt und öffnet sich hier ebenfalls zur Öffnungsseite 21 des Gelenkaußenteils 12 hin, während die zweiten Bahnpaare, die mit Bahnen 20, 21 nach Art eines Rzeppa-Gelenks ausgeführt sind, einen Öffnungswinkel $δ_2$ bilden, der sich zwar dem Betrag nach verändert hat, jedoch wie in der gestreckten Gelenkposition nach Figur 2 weiterhin in Richtung zur Öffnungsseite 21 des Gelenkaußenteils geöffnet sind. Entsprechend den Öffnungswinkeln $δ_1$, $δ_2$, ergeben sich die Richtungen der Kräfte $F_1$, $F_2$ auf die Kugeln in der Schnittebene, wie in Darstellung d) erkennbar ist, sind sämtliche Kugelkräfte in ihrer Wirkung übereinstimmend bezüglich ihrer Richtung, wenn auch nicht dem Betrage nach, so daß vom Gelenkaußenteil aus eine Gegenkraft $F_G$ zu der Summe der Kugelkräfte auf den Käfig ausgeübt werden muß. Erfindungsgemäß wird eine solche Gegenkraft $F_G$ nur bei Überschreiten des Lebensdauerwinkels 2β auftreten, während innerhalb des Lebensdauerwinkels 2β der Käfig im axialen Gleichgewicht bleibt.

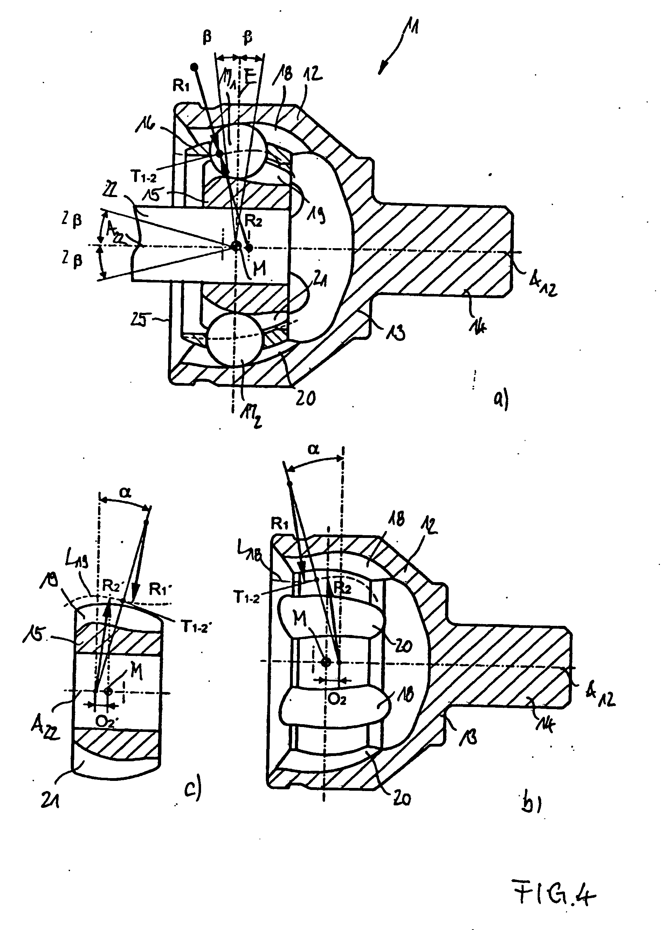

In Figur 4 ist ein möglicher Bahnverlauf der Bahnmittellinien $L_{18}$, $L_{19}$ des Gelenkaußenteils und des Gelenkinnenteils für die erfindungsgemäßen Kugelbahnen 18, 19 gemäß einem ersten Ausführungsbeispiel näher dargestellt. Die S-förmig verlaufenden Kugelbahnen, in ihrem Verlauf repräsentiert durch Bahnmittellinien $L_{18}$, $L_{19}$, verlaufen jeweils S-förmig, wobei die Position des Wendepunktes $T_{1-2}$ eingezeichnet ist, die, ausgehend von einem Radius $R_2$ (Gelenkaußenteil) bzw. $R_{2'}$ (Gelenkinnenteil), der um einen Offsetpunkt $O_2$ bzw. $O_{2'}$ geschlagen ist, unter einem Winkel von α zu einer Radialebene, d.h. einer parallelen Ebene zur Gelenkmittelebene E liegt. Über den Wendepunkt $T_{1-2}$ hinaus setzt sich die Bahnmittellinie in einem Radius $R_1$ (Gelenkaußenteil) bzw. $R_{1'}$ (Gelenkinnenteil) fort, dessen Mittelpunktslage hier nicht näher bemaßt ist, jedoch durch den Schenkel des Winkels α sowie den Radius $R_1$ bzw. $R_{1'}$ selber definiert ist. Gemäß der Erfindung liegt der Wendepunkt $T_{1-2}$ ebenso wie der Wendepunkt $T_{1-2'}$ außerhalb des Winkelsektors der Winkel $β_{L/2}$ zu jeder Seite von der Gelenkmittelebene E aus betrachtet. Da die Richtungsumkehr des Winkels $δ_1$ bei Überschreiten des Wendepunktes $T_{1-2}$ in den ersten Bahnpaaren erfolgt, wird durch die Bedingung, die hier bezeichnet ist, sichergestellt, daß im Lebensdauerbereich (Beugung von $A_{22}$ zu $A_{12}$ <= 2β nach beiden Seiten) keine Axialkräfte am Käfig auftreten, sondern der Käfig axialkraftfrei im Gelenkaußenteil gehalten ist.

Während der Lebensdauerwinkel 2β jeweils ein Mittelpunktswinkel bezogen auf den Gelenkmittelpunkt M ist, und zwar ausgehend von der Längsachse $A_{12}$ bzw. der Mittelebene E und auf diese Weise eine Kugelposition auf der Bahnmittellinie $L_{18}$, $L_{19}$ beschreibt, ist der Mittelpunkt des Winkels α an die Tangente an die Bahnmittellinie im Wendepunkt $T_{1-2}$ jeweils mit einem Offset $O_2$, $O_2$, zum Gelenkmittelpunkt M behaftet.

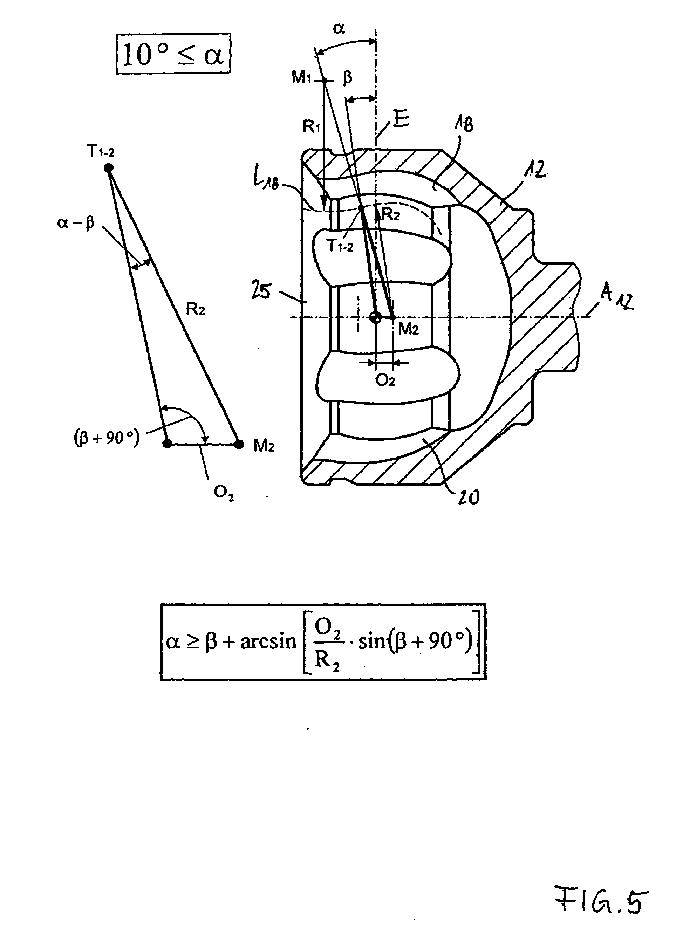

In Figur 5 ist die Beziehung zwischen Lebensdauerwinkel β bezogen auf den Weg der Kugel längs der Bahnmittellinie $L_{18}$ im Gelenkaußenteil 12 im Verhältnis zum Wendepunktwinkel α dargestellt. Es gilt die Bedingung

$$\alpha \geq \frac{\beta_L}{2} + \arcsin\left[\frac{O_2}{R_2} \cdot \sin\left(\frac{\beta_L}{2} + 90°\right)\right]$$

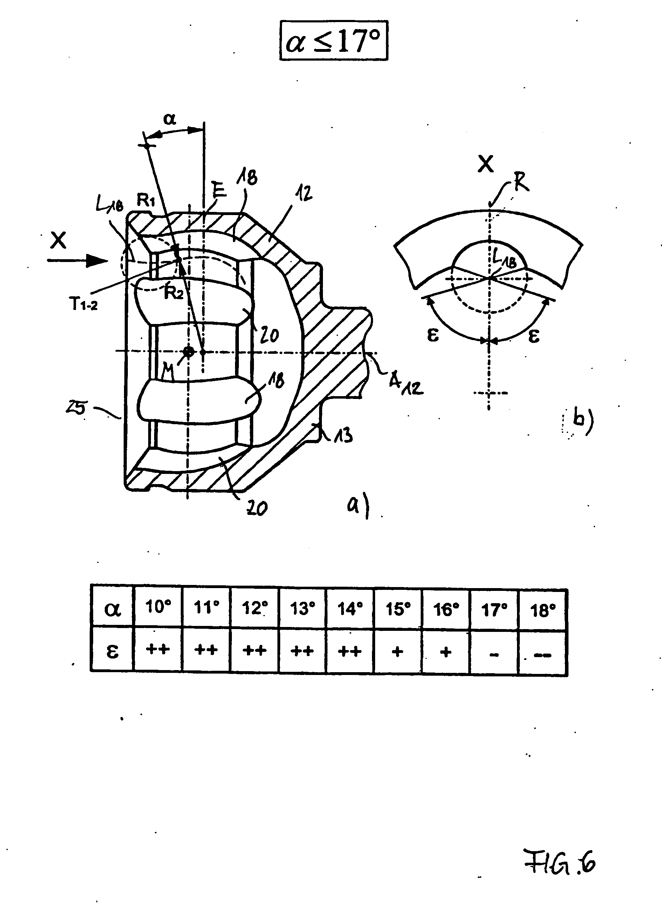

In Figur 6 ist für ein Gelenkaußenteil 12 nach Figur 5 der Einfluß des Wendepunktwinkels α auf den Bahnumschlingungswinkel ε im Gelenkaußenteil dargestellt. Hierbei ist der Bahnumschlingungswinkel ε jeweils als Winkel zwischen einer Radialebene R und einem Strahl durch den Kugelmittelpunkt bzw. die Bahnmittellinie $L_{18}$ an eine Bahnkante definiert. Wenn der Bahnumschlingungswinkel ε klein wird, entstehen ungünstige Kantenbelastungen in den Bahnen 18, die zu Schäden führen können. Hiermit wird die Drehmomentkapazität begrenzt. Bis zu einem Wendepunktwinkel α von 16° ist der Bahnumschlingungswinkel ε noch zufriedenstellend groß.

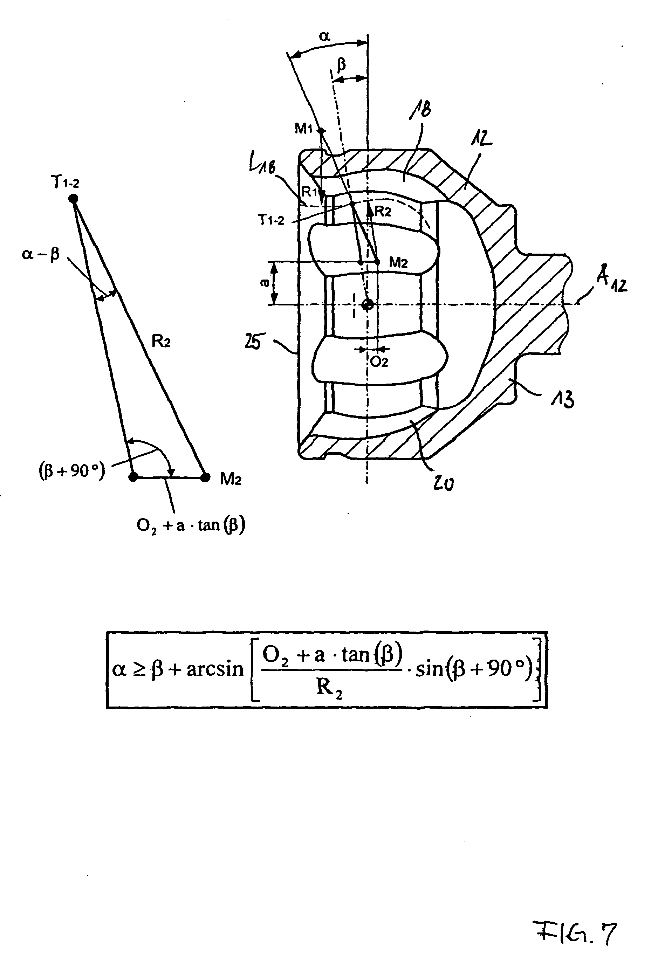

In Figur 7 ist das Verhältnis zwischen Lebensdauerwinkel bezogen auf den Kugelweg in der Bahn (β) und Wendepunktwinkel α für ein zweites mögliches Ausführungsbeispiel eines erfindungsgemäßen Gelenkaußenteils dargestellt. Im Bereich um die Gelenkmittelebene E hat die Mittellinie $L_{18}$ der Kugelbahn 18 hierbei einen geringeren Radius $R_2$ mit einem Mittelpunkt $M_2$, der gegenüber dem Gelenkmittelpunkt M um einen axialen Offset $O_2$ und um einen radialen Offset a versetzt ist. Über diesen Winkel ist die Tangente an den Wendepunkt $T_{1-2}$ definiert. Vom Wendepunkt aus setzt sich die Bahnmittellinie mit einem Radius $R_1$ um einen Mittelpunkt $M_1$ fort, der durch die Größe von $R_1$ und die Größe des Winkels α bestimmt ist. Zwischen dem um den Gelenkmittelpunkt M angetragenen Lebensdauerwinkel β und dem Wendepunktwinkel α ergibt sich die Beziehung

$$\alpha \geq \frac{\beta_L}{2} + \arcsin\left[\frac{O_2 + a \cdot \tan\left(\frac{\beta_L}{2}\right)}{R_2} \cdot \sin\left(\frac{\beta_L}{2} + 90°\right)\right]$$

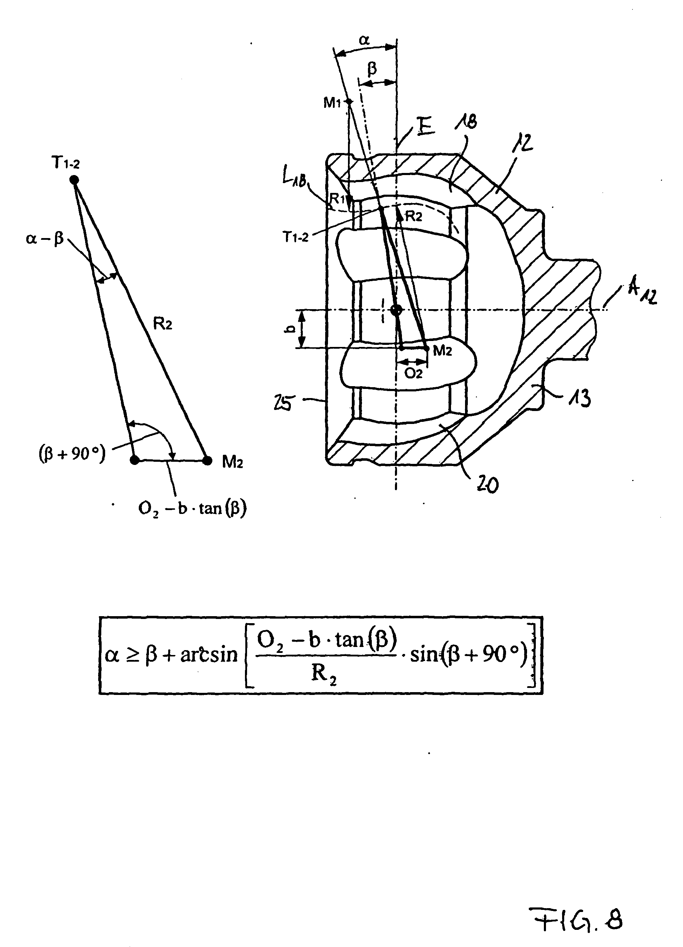

In Figur 8 ist das Verhältnis zwischen Lebensdauerwinkel bezogen auf den Kugelweg in der Bahn (β) und Wendepunktwinkel α für ein drittes mögliches Ausführungsbeispiel eines erfindungsgemäßen Gelenkaußenteils dargestellt. Im Bereich um die Gelenkmittelebene E hat die Mittellinie $L_{18}$ der Kugelbahn 18 hierbei einen geringeren Radius $R_2$ mit einem Mittelpunkt $M_2$, der gegenüber dem Gelenkmittelpunkt M um einen axialen Offset $O_2$ und um einen radialen Offset b versetzt ist. Über diesen Winkel ist die Tangente an den Wendepunkt $T_{1-2}$ definiert. Vom Wendepunkt aus setzt sich die Bahnmittellinie mit einem Radius $R_1$ um einen Mittelpunkt $M_1$ fort, der durch die Größe von $R_1$ und die Größe des Winkels α bestimmt ist. Zwischen dem um den Gelenkmittelpunkt M angetragenen Lebensdauerwinkel β und dem Wendepunktwinkel α ergibt sich die Beziehung

$$\alpha \geq \frac{\beta_L}{2} + \arcsin\left[\frac{O_2 - b \cdot \tan\left(\frac{\beta_L}{2}\right)}{R_2} \cdot \sin\left(\frac{\beta_L}{2} + 90°\right)\right]$$

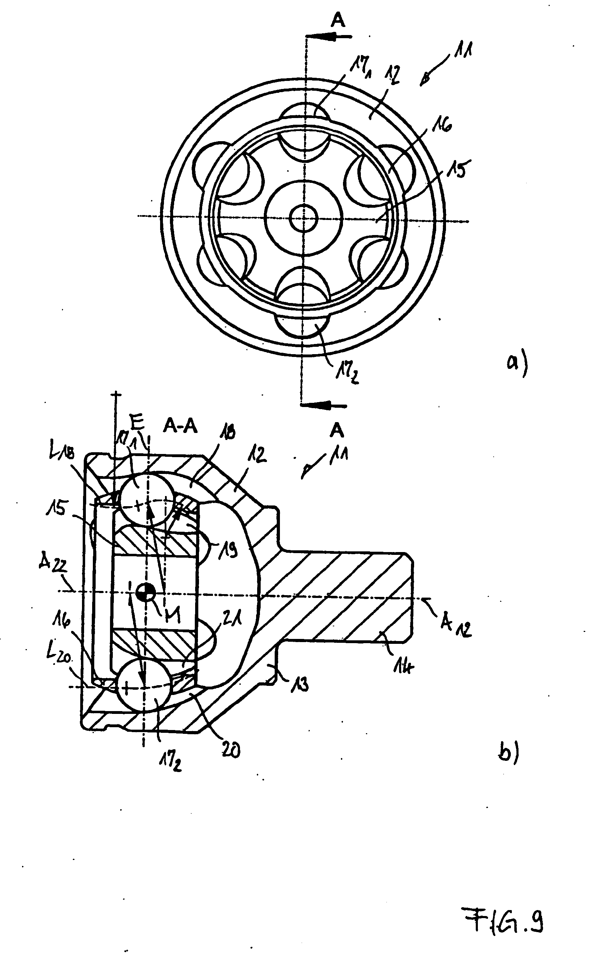

In Figur 9 ist ein 6-Kugel-Gelenk dargestellt, bei dem sich der Verlauf der Mittellinien $L_{18}$ der äußeren Kugelbahnen 18 aus drei Radien $R_1$, $R_2$, $R_3$ zusammensetzt, die sich die Radien $R_1$, $R_2$ über einen Wendepunkt aneinander anschließen, während der Verlauf der Mittellinien $L_{20}$ der zweiten äußeren Kugelbahnen 20 durch einen Radius $R_5$ mit anschließender achsparalleler Gerade definiert.

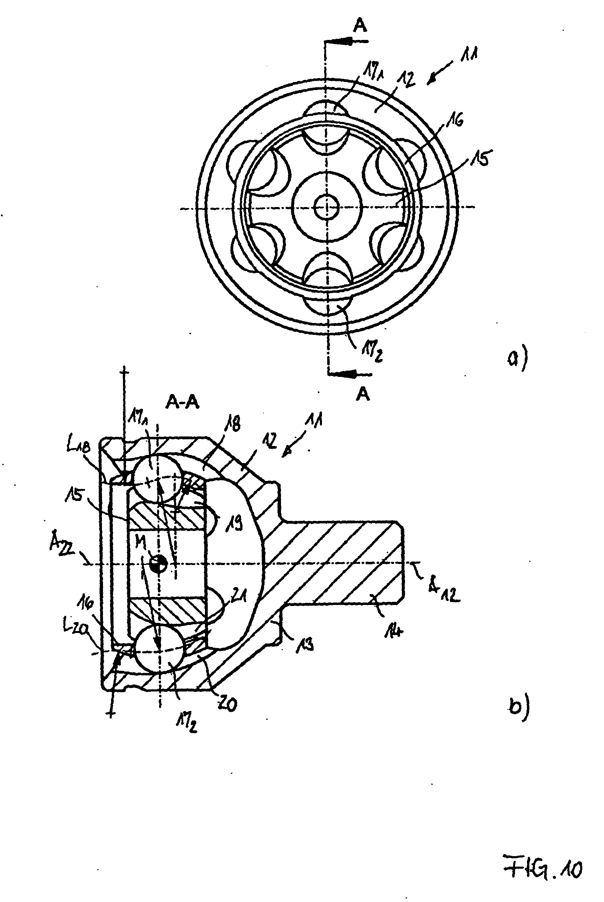

In Figur 10 ist ein 6-Kugel-Gelenk gezeigt, bei dem sich der Verlauf der Mittellinien $L_{18}$ der ersten äußeren Kugelbahnen 18 durch drei Radien $R_1$, $R_2$, $R_3$ definiert, wobei sich die Radien $R_1$, $R_2$ über einen Wendepunkt aneinander anschließen, während die Mittellinien $L_{20}$ der zweiten äußeren Kugelbahnen 20 über zwei Radien $R_4$, $R_5$ definiert ist, die sich über einen Wendepunkt aneinander anschließen.

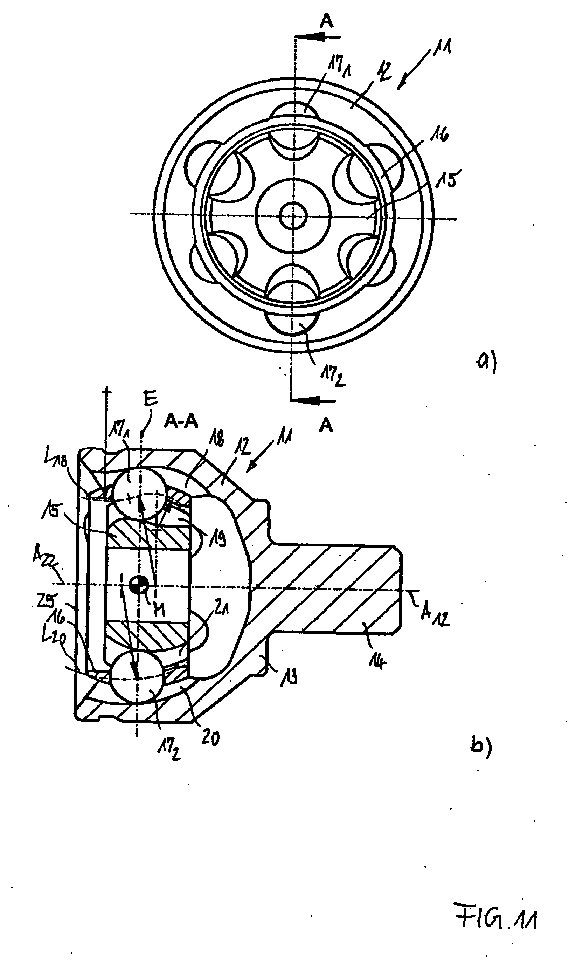

In Figur 11 ist ein 6-Kugel-Gelenk dargestellt, bei dem sich der Verlauf der Mittellinien $L_{18}$ der äußeren Kugelbahnen 18 aus drei Radien $R_1$, $R_2$, $R_3$ zusammensetzt, wobei sich die Radien $R_1$, $R_2$ über einen Wendepunkt aneinander anschließen, während der Verlauf der Mittellinien $L_{20}$ der zweiten äußeren Kugelbahnen 20 durch einen einheitlichen Radius $R_5$ definiert. Die zweiten Bahnen sind damit nach Art von Bahnen von RF-Gelenken gestaltet.

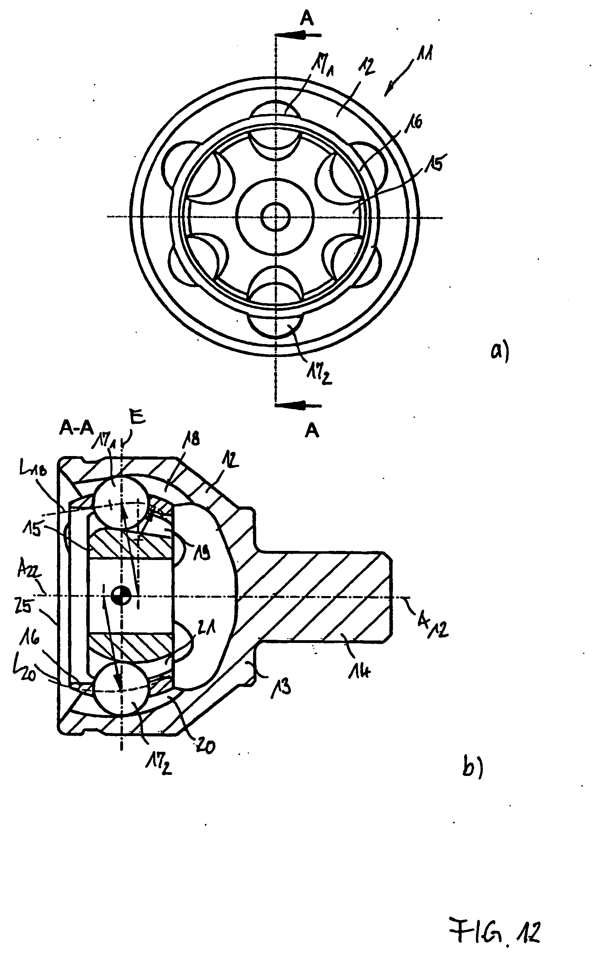

In Figur 12 ist ein erfindungsgemäßes 6-Kugel-Gelenk dargestellt, bei dem sich der Verlauf der Mittellinien $L_{18}$ der äußeren Kugelbahnen 18 aus zwei Radien $R_2$, $R_3$ und einer an den Radius $R_2$ in Richtung zur Öffnung tangential anschließenden Geraden zusammensetzt, während der Verlauf der Mittellinien $L_{20}$ der zweiten äußeren Kugelbahnen 20 durch einen einheitlichen Radius $R_5$ definiert ist.

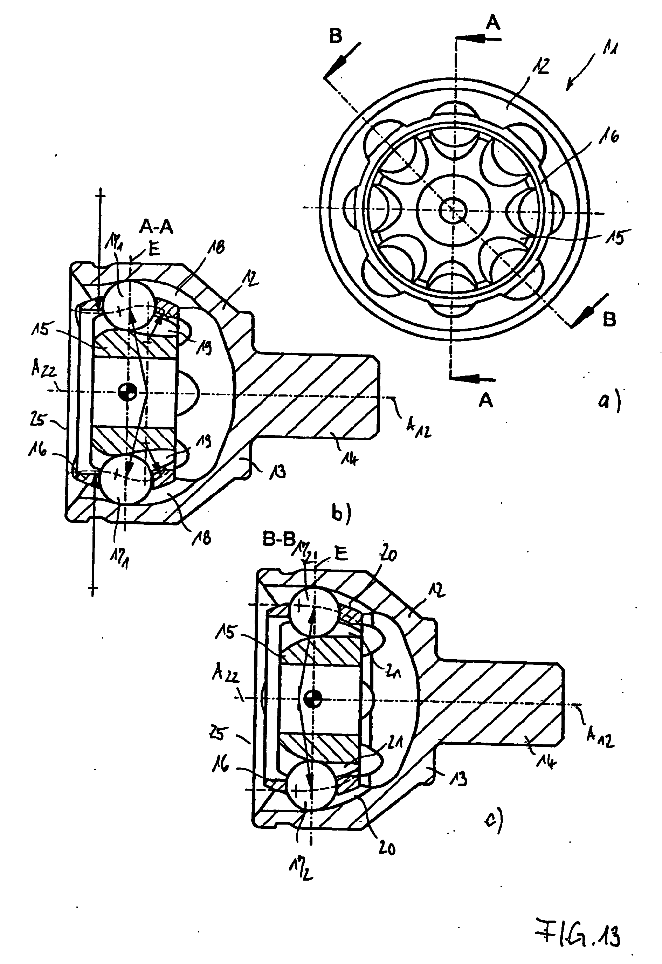

In Figur 13 ist ein 8-Kugel-Gelenk gezeigt, bei dem sich der Verlauf der Mittellinien $L_{18}$ der äußeren Kugelbahnen 18 aus drei Radien $R_1$, $R_2$, $R_3$ zusammensetzt, wobei sich die Radien $R_1$, $R_2$ über einen Wendepunkt aneinander anschließen, während der Verlauf der Mittellinien $L_{20}$ der zweiten äußeren Kugelbahnen 20 durch einen Radius $R_5$ mit anschließender achsparalleler Gerade definiert ist.

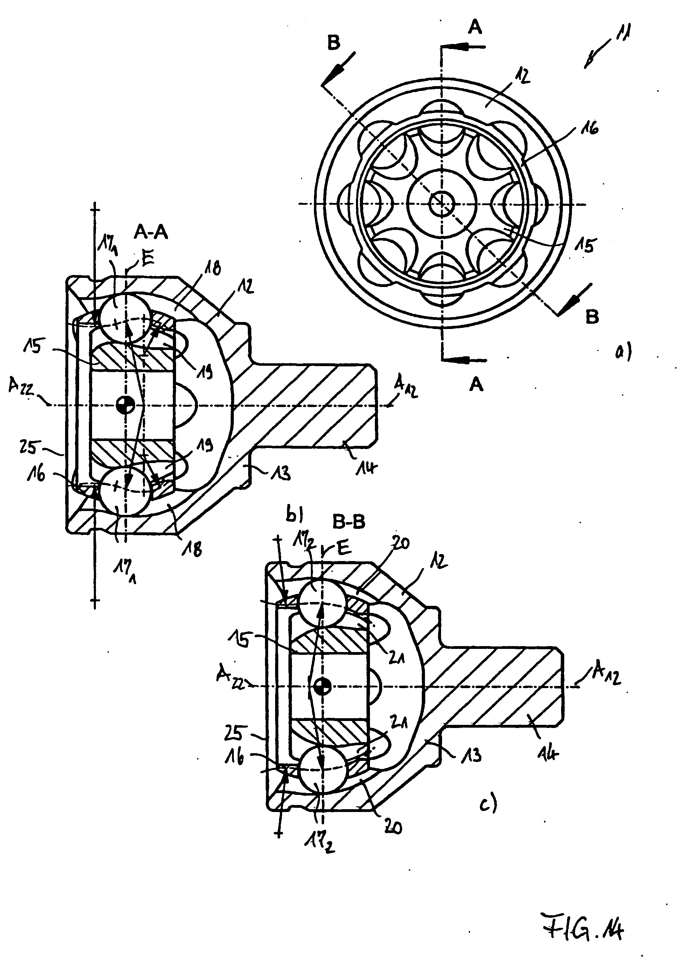

Figur 14 ist ein 8-Kugel-Gelenk gezeigt, bei dem sich der Verlauf der Mittellinien $L_{18}$ der ersten äußeren

Kugelbahnen 18 durch drei Radien $R_1$, $R_2$, $R_3$ definiert, wobei sich die Radien $R_1$, $R_2$ über einen Wendepunkt aneinander anschließen, während die Mittellinien $L_{20}$ der zweiten äußeren Kugelbahnen 20 über zwei Radien $R_4$, $R_5$ definiert ist, die sich über einen Wendepunkt aneinander anschließen.

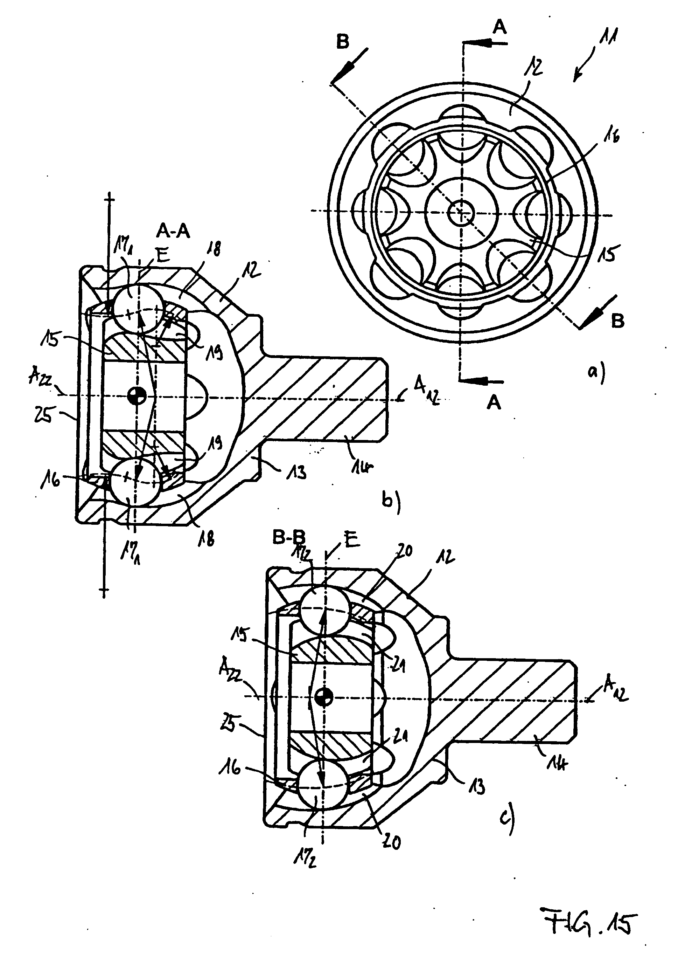

Figur 15 ist ein 8-Kugel-Gelenk dargestellt, bei dem sich der Verlauf der Mittellinien $L_{18}$ der äußeren Kugelbahnen 18 aus drei Radien $R_1$, $R_2$, $R_3$ zusammensetzt, wobei sich die Radien $R_1$, $R_2$ über einen Wendepunkt aneinander anschließen, während der Verlauf der Mittellinien $L_{20}$ der zweiten äußeren Kugelbahnen 20 durch einen einheitlichen Radius $R_5$ definiert. Die zweiten Bahnen sind damit nach Art der Bahnen von RF-Gelenken gestaltet.

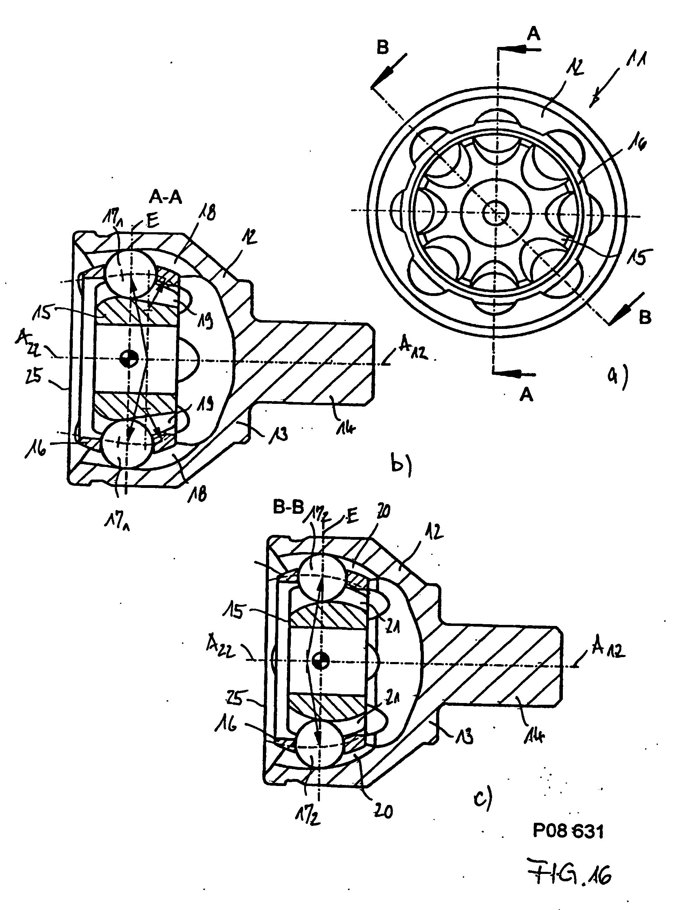

In Figur 16 ist ein erfindungsgemäßes 8-Kugel-Gelenk dargestellt, bei dem sich der Verlauf der Mittellinie der äußeren Kugelbahnen 18 aus zwei Radien $R_2$, $R_3$ und einer an den Radius $R_2$ in Richtung zur Öffnung tangential anschließenden Geraden zusammensetzt, während der Verlauf der Mittellinien $L_{20}$ der zweiten äußeren Kugelbahnen 20 durch einen einheitlichen Radius $R_5$ definiert ist.

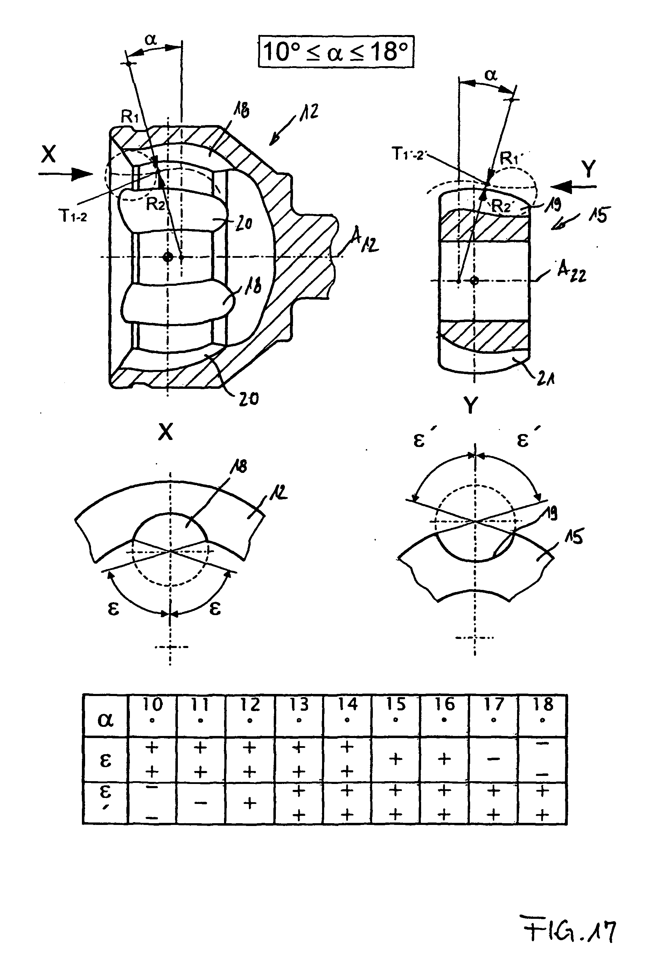

In Figur 17 ist die Bahnform der ersten äußeren Kugelbahnen und der ersten inneren Kugelbahnen für ein 6-Kugel-Gegenbahngelenk gemäß Figur 1 im einzelnen gezeigt, wobei die Mittellnie $L_{18}$ der ersten äußeren Kugelbahn 18 sich aus zwei Radien $R_1$, $R_2$ zusammensetzt, wie bereits zuvor beschrieben, und die der Mittellinie $L_{19}$ der inneren Kugelbahn 19 aus zwei bezüglich des Gelenkmittelpunkts M dazu symmetrischen Radien $R_{1'}$, $R_{2'}$. Zusätzlich ist das Verhältnis zwischen Wendepunktwinkel $\alpha$ und Bahnumschlingungswinkel $\varepsilon$ für die Bahn 18 im Gelenkaußenteil und für den Bahnumschlingungswinkel $\varepsilon'$ für die Bahn 19 im Gelenkinnenteil tabellarisch dargestellt. Hieraus ergibt sich, daß $\alpha$ > = 10° und < = 18° sein muß, um zufriedenstellende Umschlingungswinkel $\varepsilon$, $\varepsilon'$ zu garantieren.

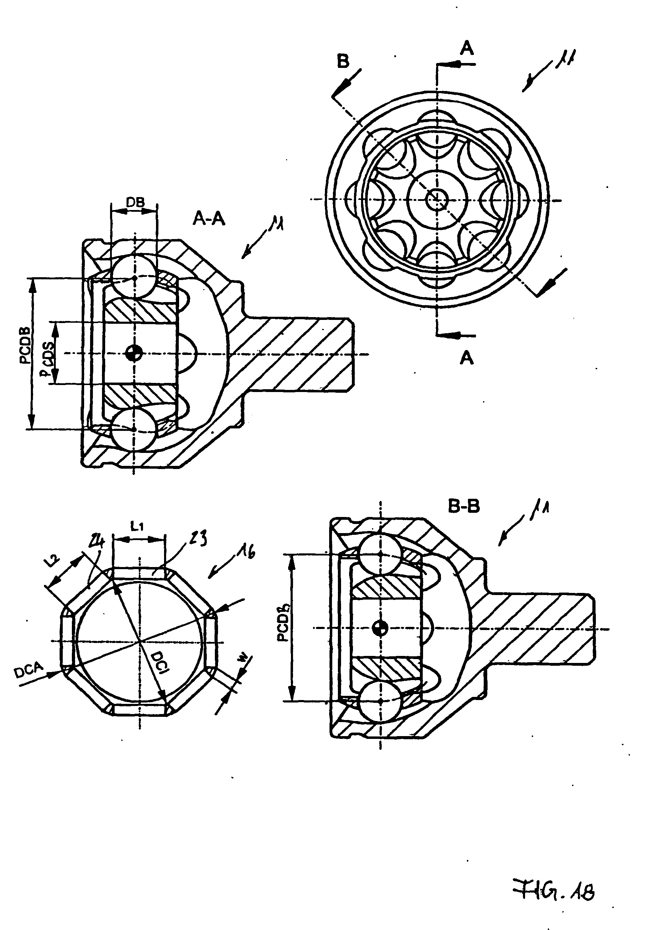

In Figur 18 ist ein 8-Kugel-Gelenk gezeigt, das mit dem in Figur 13 gezeigten übereinstimmt, wobei der Kugelkäfig 16 als Einzelheit im Querschnitt zusätzlich gezeigt ist. Hierbei ist erkennbar, daß die Kugelfenster 23 für die ersten Kugeln $17_1$ eine geringere Umfangslänge $L_1$ haben, als die Kugelfenster 24 für die zweiten Kugeln $17_2$, die eine größere Umfangslänge $L_2$ haben. Der äußere Käfigdurchmesser ist mit DCA bezeichnet, der innere Käfigdurchmesser mit DCI, jeweils bezogen auf Mittelebene E, in der der Kugelkäfig geschnitten ist. Die Umfangsbreite der Käfigstege ist außen mit W bezeichnet. Der Teilkreisradius der Kugeln im Gelenk hat die Bezeichnung PCDB, während die Einstecköffnung für die Welle im Gelenkinnenteil einen Durchmesser von PCDS hat. Dies ist für den Fall, daß die Verbindung zwischen Gelenkinnenteil 15 und Welle (22) über eine Wellenverzahnung hergestellt wird, der mittlere Verzahnungsdurchmesser der Wellenverzahnung im Gelenkinnenteil.

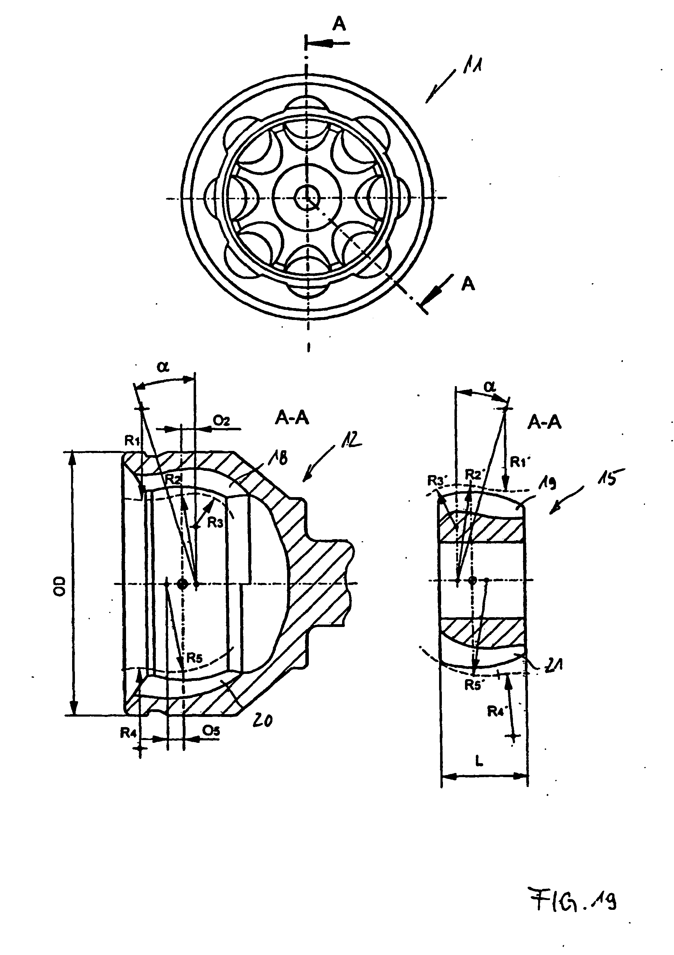

In Figur 19 ist für ein Gelenk mit acht Kugeln der Aufbau der Bahnmittellinien am Gelenkaußenteil und am Gelenkinnenteil gesondert aufgebaut. Die ersten äußeren Bahnen 18 sind aus den drei bereits erwähnten Radien $R_1$, $R_2$, $R_3$ zusammengesetzt, während die Bahnmittellinie der ersten inneren Kugelbahn aus drei gleich großen symmetrisch dazu positionierten Radien $R_{1'}$, $R_{2'}$, $R_{3'}$ zusammengesetzt sind. Für die zweiten äußeren Kugelbahnen gilt die Zusammensetzung aus den Radien $R_4$ und $R_5$, während die entsprechenden zweiten inneren Kugelbahnen 21 bezogen auf den Gelenkmittelpunkt M dazu symmetrisch angeordnete Radien $R_{4'}$, $R_{5'}$ aufweisen. Der größte Außendurchmesser des Gelenkaußenteils ist mit OD bezeichnet, die axiale Länge des Gelenkinnenteils mit L.

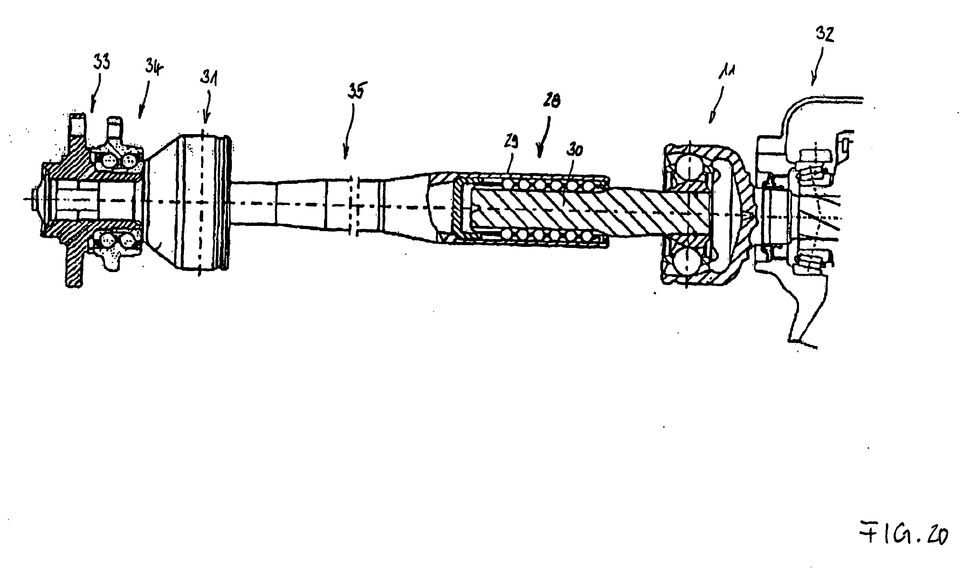

In Figur 20 ist eine Gelenkwelle in einer Einbausituation als Seitenwelle in einem Kraftfahrzeug dargestellt. Es ist eine erfindungsgemäße Gelenkwelle dargestellt, die ein erfindungsgemäßes Gleichlaufgelenk 11 als Monoblockgelenk aufweist, weiterhin eine Zwischenwelle 35 und ein zweites Gleichlaufgelenk 31, das ebenfalls ein erfindungsgemäßes Gelenk sein kann, insbesondere baugleich mit dem Gelenk 11. Die Zwischenwelle 35 umfaßt eine Axialverschiebeeinheit 28, die als wesentliche Bestandteile eine Hülse 29, einen Zapfen 30 sowie zwischen beiden wirksame nicht im einzelnen bezeichnete drehmomentübertragende Kugeln umfaßt und die einen Längenausgleich der Gelenkwelle zwischen den Gleichlaufgelenken 11, 31 zuläßt. Der Wellenzapfen des erfindungsgemäßen Gelenks 11 ist in ein Differentialgetriebe 32 eingesteckt und in diesem festgelegt, während der Wellenzapfen des zweiten Festgelenks 31 in eine Radnabenanordnung 33 mit einer Radlagerung 34 eingesteckt ist.

Bezugszeichenliste

| | |
|---|---|
| 11 | Gleichlaufgelenk |
| 12 | Gelenkaußenteil |
| 13 | Boden |
| 14 | Zapfen |
| 15 | Gelenkinnenteil |
| 16 | Kugelkäfig |
| 17 | Kugel |
| 18 | erste Außenbahn |
| 19 | erste Innenbahn |
| 20 | zweite Außenbahn |

21    zweite Innenbahn
22    Welle
23    Käfigfenster
24    Käfigfenster
25    Gelenköffnung

$\beta_{max}$    Maximaler Gelenkbeugewinkel
$\beta$    Lebensdauerwinkel
$\delta$    Öffnungswinkel
$\alpha$    Wendepunktwinkel
$T_{1-2}$    Wendepunkt
L    Mittellinie
A    Längsachse
R    Radius
E    Mittelebene
M    Gelenkmittelpunkt
O    Axialoffset
A    Radialoffset
b    Radialoffset

## Patentansprüche

**1.**   Gleichlaufgelenk (11) in Form eines Gegenbahngelenks mit den Merkmalen

ein Gelenkaußenteil (12), welches eine erste Längsachse ($A_{12}$) und axial zueinander entgegengesetzt eine Anschlußseite und eine Öffnungsseite hat, und das erste äußere Kugelbahnen (18) und zweite äußere Kugelbahnen (20) aufweist,

ein Gelenkinnenteil (15), welches eine zweite Längsachse ($A_{22}$) und Anschlußmittel für eine zur Öffnungsseite des Gelenkaußenteils (12) weisende Welle (22) hat und das erste innere Kugelbahnen (19) und zweite innere Kugelbahnen (21) aufweist,

die ersten äußeren Kugelbahnen (18) und die ersten inneren Kugelbahnen (19) bilden erste Bahnpaare miteinander,

die zweiten äußeren Kugelbahnen (20) und die zweiten inneren Kugelbahnen (21) bilden zweite Bahnpaare miteinander, die Bahnpaare nehmen jeweils eine drehmomentübertragende Kugel ($17_1$, $17_2$) auf,

ein Kugelkäfig (16) sitzt zwischen Gelenkaußenteil (12) und Gelenkinnenteil (15) und weist umfangsverteilte Käfigfenster ($24_1$, $24_2$) auf, die jeweils zumindest eine der Kugeln ($17_1$, $17_2$) aufnehmen,

der Öffnungswinkel ($\delta_1$) der ersten Bahnpaare öffnet sich bei gestrecktem Gelenk in der Gelenkmittelebene (E) von der Öffnungsseite zur Anschlußseite des Gelenkaußenteils (12),

der Öffnungswinkel ($\delta_2$) der zweiten Bahnpaare öffnet sich bei gestrecktem Gelenk in der Gelenkmittelebene (E) von der Anschlußseite zur Öffnungsseite des Gelenkaußenteils (12),

wobei die Bahnmittellinien ($L_{18}$, $L_{19}$) der ersten Bahnpaare jeweils einen Wendepunkt ($T_{1-2}$) haben und der Mittelpunktswinkel ($\beta$) an den Wendepunkt ($T_{1-2}$) bezogen auf die Gelenkmittelebene (E) jeweils größer als 4° ist,

**dadurch gekennzeichnet,**

**daß** die Bahnmittellinien ($L_{18}$, $L_{19}$) sich aus einem Radius ($R_2$), einer sich im Wendepunkt ($T_{1-2}$) anschließenden Geraden und einem sich auf der Gegenseite an den Radius ($R_2$) anschließenden kleineren Radius ($R_3$) mit gleichem Krümmungssinn zusammensetzen.

**2.**   Gleichlaufgelenk nach Anspruch 1,
**dadurch gekennzeichnet,**
**daß** der Mittelpunktswinkel ($\beta$) an den Wendepunkt ($T_{1-2}$) bezogen auf die Gelenkmittelebene (E) jeweils größer als 5° ist.

**3.**   Gelenk nach Anspruch 1,
**dadurch gekennzeichnet,**
**daß** der Mittelpunktswinkel ($\beta$) an den Wendepunkt ($T_{1-2}$) bezogen auf die Gelenkmittelebene (E) jeweils kleiner als 12° ist.

**4.**   Gleichlaufgelenk nach einem der Ansprüche 1 bis 3,

**dadurch gekennzeichnet,**
**daß** eine Tangente an die Bahnmittellinien ($L_{18}$, $L_{19}$) der ersten Bahnpaare im Wendepunkt ($T_{1-2}$) mit der jeweiligen Längsachse ($A_{12}$, $A_{22}$), bzw. eine Senkrechte auf dieser Tangente mit der Gelenkmittelebene (E), einen Wendepunktwinkel ($\alpha$) bildet, der jeweils größer oder gleich 10° ist und der jeweils kleiner oder gleich 17° ist, d. h. 10° $\leq$ $\alpha \leq$ 17°.

5. Gleichlaufgelenk nach Anspruch 4,
   **dadurch gekennzeichnet,**
   **daß** der Wendepunktwinkel ($\alpha$) mit

$$\alpha \geq \frac{\beta_L}{2} + \arcsin\left[\frac{O_2}{R_2} \cdot \sin\left(\frac{\beta_L}{2} + 90°\right)\right]$$

definiert ist, wobei $O_2$ der axiale Abstand des Schnittpunkts einer Senkrechten auf der Tangente mit der jeweiligen Längsachse ($A_{12}$, $A_{22}$) und ($R_2$) der Abstand dieses Schnittpunktes vom Wendepunkt ($T_{1-2}$) ist.

6. Gleichlaufgelenk nach Anspruch 4,
   **dadurch gekennzeichnet,**
   **daß** der Wendepunktwinkel ($\alpha$) mit

$$\alpha \geq \frac{\beta_L}{2} + \arcsin\left[\frac{O_2 + a \cdot \tan\left(\frac{\beta_L}{2}\right)}{R_2} \cdot \sin\left(\frac{\beta_L}{2} + 90°\right)\right]$$

definiert ist, wenn die jeweilige Bahnmittellinie ($L_{18}$, $L_{19}$) von der Gelenkmittelebene (E) bis zum Wendepunkt ($T_{1-2}$) einen Radius ($R_2$) aufweist, dessen Mittelpunkt ($M_2$) von der Gelenkmittelebene (E) den axialen Abstand ($O_2$) und von der jeweiligen Längsachse ($A_{12}$, $A_{22}$) den radialen Abstand (a) in Richtung zum Wendepunkt ($T_{1-2}$) hat.

7. Gleichlaufgelenk nach Anspruch 4,
   **dadurch gekennzeichnet,**
   **daß** der Wendepunktwinkel ($\alpha$) mit

$$\alpha \geq \frac{\beta_L}{2} + \arcsin\left[\frac{O_2 - b \cdot \tan\left(\frac{\beta_L}{2}\right)}{R_2} \cdot \sin\left(\frac{\beta_L}{2} + 90°\right)\right]$$

definiert ist, wenn die jeweilige Bahnmittellinie ($L_{18}$, $L_{19}$) in der Gelenkmittelebene (E) bis zum Wendepunkt ($T_{1-2}$) einen Radius ($R_2$) aufweist, dessen Mittelpunkt ($M_2$) von der Gelenkmittelebene (E) den axialen Abstand ($O_2$) und von der jeweiligen Längsachse ($A_{12}$, $A_{22}$) den radialen Abstand (b) in Richtung vom Wendepunkt ($T_{1-2}$) weg hat.

8. Gleichlaufgelenk nach einem der Ansprüche 1 bis 7,
   **dadurch gekennzeichnet,**
   **daß** die Bahnmittellinien ($L_{20}$, $L_{21}$) der zweiten Kugelbahnen sich aus einem Radius ($R_5$) und einer zur Öffnungsseite sich anschließenden achsparallelen Geraden zusammensetzen.

9. Gleichlaufgelenk nach einem der Ansprüche 1 bis 7,
   **dadurch gekennzeichnet,**

**daß** die Bahnmittellinien ($L_{20}$, $L_{21}$) der zweiten Kugelbahnen sich aus einem Radius ($R_5$) und einem sich zur Öffungsseite anschließenden Gegenradius ($R_4$) zusammensetzen.

10. Gleichlaufgelenk nach einem der Ansprüche 1 bis 7,
    **dadurch gekennzeichnet,**
    **daß** die Bahnmittellinien ($L_{20}$, $L_{21}$) der zweiten Kugelbahnen aus einem Radius ($R_5$) gebildet werden.

11. Gleichlaufgelenk nach einem der Ansprüche 1 bis 10,
    **dadurch gekennzeichnet,**
    **daß** das Gelenk ein 6-Kugel-Gelenk ist.

12. Gleichlaufgelenk nach einem der Ansprüche 1 bis 10,
    **dadurch gekennzeichnet,**
    **daß** Gelenk ein 8-Kugel-Gelenk ist.

13. Gleichlaufgelenk nach einem der Ansprüche 1 bis 10,
    **dadurch gekennzeichnet,**
    **daß** Käfigfenster ($24_1$) für die ersten Kugeln ($17_1$) in Umfangsrichtung kürzer sind als Käfigfenster ($24_2$) für die zweiten Kugeln ($17_2$).

14. Gleichlaufgelenk nach einem der Ansprüche 1 bis 11 und Anspruch 12,
    **dadurch gekennzeichnet,**
    **daß** für das Verhältnis des Teilkreisdurchmessers der Kugeln PCDB und des Krümmungsradius $R_1$ folgendes gilt

$$1,5 < PCDB / R1 < 1,9.$$

15. Gleichlaufgelenk nach einem der Ansprüche 1 bis 11 und Anspruch 12,
    **dadurch gekennzeichnet,**
    **daß** für das Verhältnis des Teilkreisdurchmessers der Kugeln PCDB und des Krümmungsradius $R_2$ folgendes gilt

$$1,8 < PCDB / R2 < 2,2.$$

16. Gleichlaufgelenk nach einem der Ansprüche 1 bis 11 und Anspruch 12,
    **dadurch gekennzeichnet,**
    **daß** für das Verhältnis des Teilkreisdurchmessers der Kugeln PCDB und des Krümmungsradius $R_3$ folgendes gilt

$$2,3 < PCDB / R3 < 2,7.$$

17. Gleichlaufgelenk nach einem der Ansprüche 1 bis 11 und Anspruch 12,
    **dadurch gekennzeichnet,**
    **daß** für das Verhältnis des Teilkreisdurchmessers der Kugeln PCDB und des Krümmungsradius $R_4$ folgendes gilt

$$2,1 < PCDB / R4 < 2,5.$$

18. Gleichlaufgelenk nach einem der Ansprüche 1 bis 11 und Anspruch 12,
    **dadurch gekennzeichnet,**
    **daß** für das Verhältnis des Teilkreisdurchmessers der Kugeln PCDB und des Krümmungsradius $R_5$ folgendes gilt

$$1{,}8 < PCDB / R5 < 2{,}2.$$

**19.** Gleichlaufgelenk nach einem der Ansprüche 1 bis 11 und Anspruch 12,
**dadurch gekennzeichnet,**
**daß** für das Verhältnis des Teilkreisdurchmessers der Kugeln PCDB und des axialen Mittelpunktversatzes $O_2$ des Krümmungsradius $R_2$ folgendes gilt

$$12 < PCDB / O2 < 16.$$

**20.** Gleichlaufgelenk nach einem der Ansprüche 1 bis 11 und Anspruch 12,
**dadurch gekennzeichnet,**
**daß** für das Verhältnis des Teilkreisdurchmessers der Kugeln PCDB und des axialen Mittelpunktversatzes $O_5$ des Krümmungsradius $R_5$ folgendes gilt

$$12 < PCDB / O5 < 16.$$

**21.** Gleichlaufgelenk nach einem der Ansprüche 1 bis 11 und Anspruch 12,
**dadurch gekennzeichnet,**
**daß** für das Verhältnis des Teilkreisdurchmessers der Kugeln PCDB und des Außendurchmessers OD des Gelenkaußenteils (12) folgendes gilt

$$0{,}6 < PCDB / OD < 0{,}8.$$

**22.** Gleichlaufgelenk nach einem der Ansprüche 1 bis 11 und Anspruch 12,
**dadurch gekennzeichnet,**
**daß** für das Verhältnis des Teilkreisdurchmessers der Kugeln PCDB und der axialen Länge L des Gelenkinnenteils (15) folgendes gilt

$$2{,}1 < PCDB / L < 2{,}5.$$

**23.** Gleichlaufgelenk nach einem der Ansprüche 1 bis 11 und Anspruch 12,
**dadurch gekennzeichnet,**
**daß** für das Verhältnis des Teilkreisdurchmessers der Kugeln PCDB und des Kugeldurchmessers DB folgendes gilt

$$3{,}4 < PCDB / DB < 4{,}0.$$

**24.** Gleichlaufgelenk nach einem der Ansprüche 1 bis 11 und Anspruch 12,
**dadurch gekennzeichnet,**
**daß** für das Verhältnis des Teilkreisdurchmessers der Kugeln PCDB und des Teilkreisradius PCDS der Einstecköffnung des Gelenkinnenteils (15) folgendes gilt

$$2,1 < \text{PCDB} / \text{PCDS} < 2,5.$$

**25.** Gleichlaufgelenk nach einem der Ansprüche 1 bis 11 und Anspruch 12,
**dadurch gekennzeichnet,**
**daß** für das Verhältnis des Rollkreisdurchmessers PCDB und des Außendurchmessers DCA des Kugelkäfigs (16) folgendes gilt

$$0,75 < \text{PCDB} / \text{DCA} < 1,05.$$

**26.** Gleichlaufgelenk nach einem der Ansprüche 1 bis 11 und Anspruch 12,
**dadurch gekennzeichnet,**
**daß** für das Verhältnis des Rollkreisdurchmessers PCDB und des Innendurchmessers DCI des Kugelkäfigs (16) folgendes gilt

$$0,85 < \text{PCDB} / \text{DCI} < 1,15.$$

**27.** Gleichlaufgelenk nach einem der Ansprüche 1 bis 11 und Anspruch 12,
**dadurch gekennzeichnet,**
**daß** für das Verhältnis des Rollkreisdurchmessers PCDB und der umfänglichen Stegbreite W des Kugelkäfigs (16) folgendes gilt

$$7,5 < \text{PCDB} / \text{W} < 11,5.$$

**28.** Gleichlaufgelenk nach einem der Ansprüche 1 bis 11 und Anspruch 12,
**dadurch gekennzeichnet,**
**daß** für das Verhältnis des Rollkreisdurchmessers PCDB und der Umfangslänge L1 der ersten Käfigfenster (23) folgendes gilt

$$2,8 < \text{PCDB} / \text{L1} < 3,4.$$

**29.** Gleichlaufgelenk nach einem der Ansprüche 1 bis 11 und Anspruch 12,
**dadurch gekennzeichnet,**
**daß** für das Verhältnis des Rollkreisdurchmessers PCDB und der Umfangslänge L2 der zweiten Käfigfenster (24) folgendes gilt

$$2,6 < \text{PCDB} / \text{L2} < 3,2.$$

**30.** Gelenkwelle umfassend zwei Gleichlaufgelenke und eine Zwischenwelle,
**dadurch gekennzeichnet,**
**daß** zumindest eines der Gleichlaufgelenke (11, 31) gemäß einem der Ansprüche 1 bis 29 ausgebildet ist.

**31.** Gelenkwelle nach Anspruch 30,

**dadurch gekennzeichnet,**
**daß** die Zwischenwelle (35) eine Axiatverschiebeeinheit(28) umfaßt.

32. Kraftfahrzeug mit zumindest zwei Gelenkwellen, die jeweils zwei Gleichlaufgelenke und eine Zwischenwelle umfassen und die jeweils als Seitenwellen ein Differentialgetriebe mit einer Radnabeneinheit verbinden,
**dadurch gekennzeichnet,**
**daß** jeweils zumindest eines der Gelenke (11, 31) jeder Gelenkwelle nach einem der Ansprüche 1 bis 29 ausgebildet
ist und sein Wellenzapfen in das Differentialgetriebe (32) eingesteckt ist.

33. Kraftfahrzeug mit zumindest zwei Gelenkwellen, die jeweils zwei Gleichlaufgelenke und eine Zwischenwelle umfassen und die jeweils als Seitenwellen ein Differentialgetriebe mit einer Radnabeneinheit verbinden,
**dadurch gekennzeichnet,**
**daß** jeweils zumindest eines der Gelenke (11, 31) jeder Gelenkwelle nach einem der Ansprüche 1 bis 29 ausgebildet
ist und sein Gelenkzapfen in die Radnabeneinheit (33) eingesteckt ist.

**Claims**

1. A constant velocity joint (11) in the form of a counter track joint with the following characteristics:

    an outer joint part (12) which comprises a first longitudinal axis ($A_{12}$), and an attaching end and an aperture
    end which are axially opposed relative to one another, and which outer joint part (12) further comprises first
    outer ball tracks (18) and second outer ball tracks (20);
    an inner joint part (15) which comprises a second longitudinal axis ($A_{22}$), and attaching means for a shaft (22)
    pointing to the aperture end of the outer joint part (12), and which inner joint part (15) further comprises first
    inner ball tracks (19) and second inner ball tracks (21);
    the first outer ball tracks (18) and the first inner ball tracks (19) form first pairs of tracks;
    the second outer ball tracks (20) and the second inner ball tracks (21) form second pairs of tracks with one
    another and the pairs of tracks each accommodate a torque transmitting ball ($17_1$, $17_2$),
    a ball cage (16) positioned between the outer joint part (12) and the inner joint part (15) and comprises circum-
    ferentially distributed cage windows ($24_1$, $24_2$) which each accommodate at least one of the balls ($17_1$, $17_2$);
    when the joint is in the aligned condition, the aperture angle ($\delta_1$) of the first pairs of tracks opens in the central
    joint plane (E) from the aperture end to the attaching end of the outer joint part (12);
    when the joint is in the aligned condition, the aperture angle ($\delta_2$) of the second pairs of tracks opens in the
    central joint plane (E) from the attaching end to the aperture end of the outer joint part (12), wherein the central
    track lines ($L_{18}$, $L_{18}$) of the first pairs of tracks each have a turning point ($T_{1-2}$) and wherein the centre angle ($\beta$)
    at the turning point ($T_{1-2}$), with reference to the central joint plane (E),
    is greater than 4°,
    **characterised in**
    **that** the central track lines ($L_{18}$, $L_{19}$) are composed of a radius ($R_2$), a straight line following in the turning point
    ($T_{1-2}$) and a smaller radius ($R_3$) adjoining the radius ($R_2$) on the opposite side and having the same direction of
    curvature.

2. A constant velocity joint according to claim 1,
    **characterised in**
    **that** the centre angle ($\beta$) at the turning point ($T_{1-2}$), with reference to the central joint plane (E), is greater than 5°.

3. Ajoint according to claim 1,
    **characterised in**
    **that** the centre angle ($\beta$) at the turning point ($T_{1-2}$), with reference to the central joint plane (E), is smaller than 12°.

4. A constant velocity joint according to any one of claims 1 to 3,
    **characterised in**
    **that** a tangent at the central track lines ($L_{18}$, $L_{19}$) of the first pairs of tracks in the turning point ($T_{1-2}$), together with
    the respective longitudinal axis ($A_{12}$, $A_{22}$) and, respectively, a perpendicular line on said tangent, together with the
    central joint plane (E), form a turning point angle ($\alpha$) each of which is greater than or equal to 10° , and each of
    which is smaller than or equal to 17°, i.e. $10° \leq \alpha \leq 17°$.

**5.** A constant velocity joint according to claim 4,
**characterised in**

**that** the inflection point angle ($\alpha$) is defined by $\quad \alpha \geq \dfrac{\beta_L}{2} + \arcsin\left[\dfrac{O_2}{R_2} \cdot \sin\left(\dfrac{\beta_L}{2} + 90°\right)\right]$

wherein ($O_2$) is the axial distance of the point of intersection of a perpendicular line on the tangent with the respective longitudinal axis ($A_{12}$, $A_{22}$) and ($R_2$) is the distance of said point of intersection from the turning point ($T_{1-2}$).

**6.** A constant velocity joint according to claim 4,
**characterised in**
**that** the turning point angle ($\alpha$) is defined by

$$\alpha \geq \frac{\beta_L}{2} + \arcsin\left[\frac{O_2 + a \cdot \tan\left(\frac{\beta_L}{2}\right)}{R_2} \cdot \sin\left(\frac{\beta_L}{2} + 90°\right)\right]$$

if the respective central track line ($L_{18}$, $L_{19}$) from the central joint plane (E) up to the turning point ($T_{1-2}$) comprises a radius ($R_2$) whose centre ($M_2$) comprises the axial distance ($O_2$) from the central joint plane (E) and the radial distance (a) from the respective longitudinal axis ($A_{12}$, $A_{22}$) towards the turning point ($T_{1-2}$).

**7.** A constant velocity joint according to claim 4,
**characterised in**

**that** the inflection point angle ($\alpha$) is defined by

$$\alpha \geq \frac{\beta_L}{2} + \arcsin\left[\frac{O_2 - b \cdot \tan\left(\frac{\beta_L}{2}\right)}{R_2} \cdot \sin\left(\frac{\beta_L}{2} + 90°\right)\right]$$

if the respective central track line ($L_{18}$, $L_{19}$) in the central joint plane (E) up to the turning point ($T_{1-2}$) comprises a radius ($R_2$) whose centre ($M_2$) comprises the axial distance ($O_2$) from the central joint plane (E) and the radial distance (b) from the respective longitudinal axis ($A_{12}$, $A_{22}$) towards the turning point ($T_{1-2}$).

**8.** A constant velocity joint according to any one of claims 1 to 7,
**characterised in**
**that** the central track lines ($L_{20}$, $L_{21}$) of the second ball tracks are composed of a radius ($R_5$) and an axis-parallel straight line which follows towards the aperture end.

**9.** A constant velocity joint according to any one of claims 1 to 7,
**characterised in**
**that** the central track lines ($L_{20}$, $L_{21}$) of the second ball tracks are composed of a radius ($R_5$) and a counter radius ($R_4$) which follows towards the aperture end.

**10.** A constant velocity joint according to any one of claims 1 to 7,
**characterised in**
**that** the central track lines ($L_{20}$, $L_{21}$) of the second ball tracks are formed by a radius ($R_5$).

**11.** A constant velocity joint according to any one of claims 1 to 10,
**characterised in**
**that** the joint is 6-ball joint.

**12.** A constant velocity joint according to any one of claims 1 to 10,
**characterised in**

**that** the joint is an 8-ball joint.

13. A constant velocity joint according to any one of claims 1 to 10,
**characterised in**
**that** the cage windows ($24_1$) for the first balls ($17_1$) are shorter in the circumferential direction than the cage windows ($24_2$) for the second balls ($17_2$).

14. A constant velocity joint according to any one of claims 1 to 11 and claim 12,
**characterised in**
**that** for the ratio of the pitch circle diameter of the balls PCDB and the radius of curvature $R_1$, the following applies:

$$1.5 < PCDB / R1 < 1.9.$$

15. A constant velocity joint according to any one of claims 1 to 11 and claim 12,
**characterised in**
**that** for the ratio of the pitch circle diameter of the balls PCDB and the radius of curvature $R_2$, the following applies:

$$1.8 < PCDB / R2 < 2.2.$$

16. A constant velocity joint according to any one of claims 1 to 11 and claim 12,
**characterised in**
**that** for the ratio of the pitch circle diameter of the balls PCDB and the radius of curvature $R_3$, the following applies:

$$2.3 < PCDB / R3 < 2.7.$$

17. A constant velocity joint according to any one of claims 1 to 11 and claim 12,
**characterised in**
**that** for the ratio of the pitch circle diameter of the balls PCDB and the radius of curvature $R_4$, the following apples:

$$2.1 < PCDB / R4 < 2.5.$$

18. A constant velocity joint according to any one of claims 1 to 11 and claim 12,
**characterised in**
**that** for the ratio of the pitch circle diameter of the balls PCDB and the radius of curvature $R_5$, the following applies:

$$1.8 < PCDB / R5 < 2.2.$$

19. A constant velocity joint according to any one of claims 1 to 11 and claim 12,
**characterised in**
**that** for the ratio of the pitch circle diameter of the balls PCDB and the axial centre offset $O_2$ of the radius of curvature $R_2$, the following applies:

$$12 < PCDB / O2 < 16.$$

20. A constant velocity joint according to any one of claims 1 to 11 and claim 12,
**characterised in**
**that** for the ratio of the pitch circle diameter of the balls PCDB and the axial centre offset $O_5$ of the radius of curvature

$R_5$, the following applies:

$$12 < PCDB / O5 < 16.$$

21. A constant velocity joint according to any one of claims 1 to 11 and claim 12, **characterised in that** for the ratio of the pitch circle diameter of the balls PCDB and the outer diameter OD of the outer joint part (12), the following applies:

$$0.6 < PCDB / OD < 0.8.$$

22. A constant velocity joint according to any one of claims 1 to 11 and claim 12, **characterised in that** for the ratio of the pitch circle diameter of the balls PCDB and the axial length L of the inner joint part (15), the following applies:

$$2.1 < PCDB / L < 2.5.$$

23. A constant velocity joint according to any one of claims 1 to 11 and claim 12, **characterised in that** for the ratio of the pitch circle diameter of the balls PCDB and the ball diameter DB, the following applies:

$$3.4 < PCDB / DB < 4.0.$$

24. A constant velocity joint according to any one of claims 1 to 11 and claim 12, **characterised in that** for the ratio of the pitch circle diameter of the balls PCDB and the pitch circle radius PCDS of the plug-in aperture of the inner joint part (15), the following applies:

$$2.1 < PCDB / PCDS < 2.5.$$

25. A constant velocityjoint according to any one of claims 1 to 11 and claim 12, **characterised in that** for the ratio of the pitch circle diameter PCDB and the outer diameter DCA of the ball cage (16), the following applies:

$$0.75 < PCDB / DCA < 1.05.$$

26. A constant velocity joint according to any one of claims 1 to 11 and claim 12, **characterised in that** for the ratio of the pitch circle diameter PCDB and the inner diameter DCI of the ball cage (16), the following applies:

$$0.85 < PCDB / DCI < 1.15.$$

**27.** A constant velocity joint according to any one of claims 1 to 11 and claim 12, **characterised in that** for the ratio of the pitch circle diameter PCDB and the circumferential web width W of the ball cage (16), the following applies:

$$7.5 < PCDB / W < 11.5.$$

**28.** A constant velocity joint according to any one of claims 1 to 11 and claim 12, **characterised in that** for the ratio of the pitch circle diameter PCDB and the circumferential length L1 of the first cage windows (23), the following applies:

$$2.8 < PCDB / L1 < 3.4.$$

**29.** A constant velocity joint according to any one of claims 1 to 11 and claim 12, **characterised in that** for the ratio of the pitch circle diameter PCDB and the circumferential length L2 of the second cage windows (24), the following applies:

$$2.6 < PCDB / L2 < 3.2.$$

**30.** A driveshaft comprising two constant velocity joints and an intermediate shaft, **characterised in that** at least one of the constant velocity joints (11, 31) is designed according to one of claims 1 to 29.

**31.** A driveshaft according to claim 30, **characterised in that** the intermediate shaft comprises an axial displacement unit (28).

**32.** A motor vehicle having at least two driveshafts which each comprise two constant velocity joints and an intermediate shaft and which each, in the form of sideshafts, connect a differential drive with a wheel hub unit, **characterised in that** at least one of the joints (11, 31) of each driveshaft is designed according to any one of claims 1 to 29 and that the shaft journal of same is inserted into the differential drive (32).

**33.** A motor vehicle having at least two driveshafts which each comprise two constant velocity joints and an intermediate shaft and which each, in the form of sideshafts, connect a differential drive with a wheel hub unit, **characterised in that** at least one of the joints (11, 31) of each driveshaft is designed according to any one of claims 1 to 31 and that the shaft journal of same is inserted into the wheel hub unit (33).

**Revendications**

**1.** Joint homocinétique (11) sous la forme d'un joint à chemins de roulement opposes avec les attributs:

une partie extérieure de joint (12), qui comporte un premier axe longitudinal ($A_{12}$) et, placés à l'opposé l'un de l'autre, un côté de raccordement et un côté d'ouverture, et qui comporte des premières chemins de roulement extérieures à billes (18) et des secondes chemins de roulement extérieures à billes (20),

une partie intérieure de joint (15), qui comporte un second axe longitudinal ($A_{22}$) et un moyen de raccordement pour un arbre (22) dirigé vers le côté d'ouverture de la partie extérieure de joint (12) et qui comporte des premières chemins de roulement intérieures à billes (19) et des secondes chemins de roulement intérieures à billes (21),

les premières chemins de roulement extérieures à billes (18) et les premières chemins de roulement intérieures à billes (19) forment ensemble des premières paires de chemins de roulement,

les secondes chemins de roulement extérieures à billes (20) et les secondes chemins de roulement intérieures à billes (21) forment ensemble des secondes paires de chemins de roulement, les paires de chemins de roulement logent chacune une bille ($17_1$, $17_2$) transmettant un couple,

une cage à billes (16) est axée entre la partie extérieure de joint (12) et la partie intérieure de joint (15) et présente des fenêtres de cage ($24_1$, $24_2$) réparties sur la périphérie, qui logent chacune au moins l'une des billes ($17_1$, $17_2$),

l'angle d'ouverture ($\delta_1$) des premières paires de chemins de roulement s'ouvre, lorsque le joint est allongé dans le plan médian du joint (E), du côté d'ouverture au côté de raccordement de la partie extérieure de joint (12),

l'angle d'ouverture ($\delta_2$) des secondes paires de chemins de roulement s'ouvre, lorsque le joint est agencé dans le plan médian du joint (E), du côté de raccordement au côté d'ouverture de la partie extérieure de joint (12),

les lignes médianes de piste ($L_{18}$, $L_{19}$) des premières paires de chemins de roulement ayant chacune un point d'inflexion ($T_{1-2}$) et l'angle au centre ($\beta$) au point d'inflexion ($T_{1-2}$) par rapport au plan médian du joint (E) est chaque fois supérieur à 4°,

**caractérisé en ce que**

les lignes médianes de chemin ($L_{18}$, $L_{19}$) sont constituées d'un rayon ($R_2$), d'une droite se raccordant au point d'inflexion ($T_{1-2}$) et d'un plus petit rayon ($R_3$) se raccordant sur le côté opposé au rayon ($R_2$) avec un sens de courbure identique.

2. Joint homocinétique selon la revendication 1,
   **caractérisé en ce que**
   l'angle au centre ($\beta$) au point d'inflexion ($T_{1-2}$) par rapport au plan médian du joint (E) est chaque fois supérieur à 5°.

3. Joint homocinétique selon la revendication 1,
   **caractérisé en ce que**
   l'angle au centre ($\beta$) au point d'inflexion ($T_{1-2}$) par rapport au plan médian du joint (E) est chaque fois inférieur à 12°.

4. Joint homocinétique selon l'une quelconque des revendications 1 à 3,
   **caractérisé en ce que**
   une tangente aux lignes médianes de chemin ($L_{18}$, $L_{19}$) des premières paires de chemins de roulement au point d'inflexion ($T_{1-2}$) avec l'axe longitudinal ($A_{12}$, $A_{22}$) respectif, ou une perpendiculaire à cette tangente avec le plan médian de joint (E) forme un angle du point d'inflexion ($\alpha$) qui est chaque fois supérieur ou égal à 10° et qui est chaque fois inférieur ou égal à 17°, c'est à dire $10° \leq \alpha \leq 17°$.

5. Joint homocinétique selon la revendication 4,
   **caractérisé en ce que**
   l'angle du point d'inflexion ($\alpha$) est défini avec

$$\alpha \geq \frac{\beta_L}{2} + \arcsin\left[\frac{O_2}{R_2}\sin\left(\frac{\beta_L}{2}+90°\right)\right]$$

$O_2$ étant la distance axiale du point d'intersection d'une perpendiculaire à la tangente avec l'axe longitudinal ($A_{12}$, $A_{22}$) respectif et ($R_2$) la distance de ce point d'inflexion au point d'inflexion ($T_{1-2}$).

6. Joint homocinétique selon la revendication 4,
   **caractérisé en ce que**
   l'angle du point d'inflexion ($\alpha$) est défini avec

$$\alpha \geq \frac{\beta_L}{2} + \arcsin\left[\frac{O_2 + a.\tan\left(\frac{\beta_L}{2}\right)}{R_2} + \sin\left(\frac{\beta_L}{2}+90°\right)\right]$$

lorsque la ligne médiane de chemin ($L_{18}$, $L_{19}$) respective allant du plan médian de joint (E) au point d'inflexion ($T_{1-2}$) présente un rayon ($R_2$) dont le centre ($M_2$) présente la distance ($O_2$) axiale par rapport au plan médian de joint (E) et la distance (a) radiale par rapport à l'axe longitudinal ($A_{12}$, $A_{22}$) respectif en direction du point d'inflexion ($T_{1-2}$).

**7.** Joint homocinétique selon la revendication 4,
**caractérisé en ce que**
l'angle du point d'inflexion ($\alpha$) est défini avec

$$\alpha \geq \frac{\beta_L}{2} + \arcsin\left[\frac{O_2 - b.\tan\left(\frac{\beta_L}{2}\right)}{R_2}\sin\left(\frac{\beta_L}{2}+90°\right)\right]$$

lorsque la ligne médiane de chemin ($L_{18}$, $L_{19}$) respective présente dans le plan médian du joint (E) jusqu'au point d'inflexion ($T_{1-2}$) un rayon ($R_2$) dont le centre ($M_2$) présente la distance axiale ($O_2$) par rapport au plan médian du joint (E) et la distance radiale (b) par rapport à l'axe longitudinal ($A_{12}$, $A_{22}$) respectif en direction du point d'inflexion ($T_{1-2}$).

**8.** Joint homocinétique selon l'une quelconque des revendications 1 à 7,
**caractérisé en ce que**
les lignes médianes de chemin ($L_{20}$, $L_{21}$) des secondes chemins de roulement à billes sont constituées d'un rayon ($R_5$) et d'une droite parallèle à l'axe et se raccordant vers le côté d'ouverture

**9.** Joint homocinétique selon l'une quelconque des revendications 1 à 7,
**caractérisé en ce que**
les lignes médianes de chemin ($L_{20}$, $L_{21}$) des secondes chemins de roulement à billes sont constituées d'un rayon ($R_5$) et d'un contre-rayon ($R_4$) se raccordant vers le côté d'ouverture

**10.** Joint homocinétique selon l'une quelconque des revendications 1 à 7,
**caractérisé en ce que**
les lignes médianes de chemin ($L_{20}$, $L_{21}$) des secondes chemins de roulement à billes sont formées d'un rayon ($R_5$),

**11.** Joint homocinétique selon l'une quelconque des revendications 1 à 10,
**caractérisé en ce que**
le joint est un joint à 6 billes.

**12.** Joint homocinétique selon l'une quelconque des revendications 1 à 10,
**caractérisé en ce que**
le joint est un joint à 8 billes.

**13.** Joint homocinétique selon l'une quelconque des revendications 1 à 10,
**caractérisé en ce que**
des fenêtres de cage ($24_1$) pour les premières billes ($17_1$) dans le sens périphérique sont plus courtes que des fenêtres de cage ($24_2$) pour les secondes billes ($17_2$).

**14.** Joint homocinétique selon l'une quelconque des revendications 1 à 11 et la revendication 12,
**caractérisé en ce que**
on a pour le rapport du diamètre primitif de référence des billes PCDB et du rayon de courbure $R_1$

$$1{,}5 < PCDB / R1 < 1{,}9.$$

**15.** Joint homocinétique selon l'une quelconque des revendications 1 à 11 et la revendication 12,
**caractérisé en ce que**
on a pour le rapport du diamètre primitif de référence des billes PCDB et du rayon de courbure $R_2$

$$1,8 < PCDB / R1 < 2,2.$$

**16.** Joint homocinétique selon l'une quelconque des revendications 1 à 11 et la revendication 12, **caractérisé en ce que**
on a pour le rapport du diamètre primitif de référence des billes PCDB et du rayon de courbure $R_3$

$$2,3 < PCDB / R3 < 2,7.$$

**17.** Joint homocinétique selon l'une quelconque des revendications 1 à 11 et la revendication 12, **caractérisé en ce que**
on a pour le rapport du diamètre primitif de référence des billes PCDB et du rayon de courbure $R_4$

$$2,1 < PCDB / R4 < 2,5.$$

**18.** Joint homocinétique selon l'une quelconque des revendications 1 à 11 et la revendication 12, **caractérisé en ce que**
on a pour le rapport du diamètre primitif de référence des billes PCDB et du rayon de courbure $R_5$

$$1,8 < PCDB / R5 < 2,2.$$

**19.** Joint homocinétique selon l'une quelconque des revendications 1 à 11 et la revendication 12, **caractérisé en ce que**
on a pour le rapport du diamètre primitif de référence des billes PCDB et du déport de centre axial $O_2$ du rayon de courbure $R_2$

$$12 < PCDB / O2 < 16.$$

**20.** Joint homocinétique selon l'une quelconque des revendications 1 à 11 et la revendication 12, **caractérisé en ce que**
on a pour le rapport du diamètre primitif de référence des billes PCDB et du déport de centre axial $O_5$ du rayon de courbure $R_5$

$$12 < PCDB / O5 < 16.$$

**21.** Joint homocinétique selon l'une quelconque des revendications 1 à 11 et la revendication 12, **caractérisé en ce que**
on a pour le rapport du diamètre primitif de référence des billes PCDB et du diamètre extérieur OD de la partie extérieure de joint (12)

$$0,6 < PCDB / OD < 0,8.$$

**22.** Joint homocinétique selon l'une quelconque des revendications 1 à 11 et la revendication 12, **caractérisé en ce que**
on a pour le rapport du diamètre primitif de référence des billes PCDB et de la longueur axiale L de la partie intérieure de joint (15)

$$2,1 < PCDB / L < 2,5.$$

**23.** Joint homocinétique selon l'une quelconque des revendications 1 à 11 et la revendication 12, **caractérisé en ce que** on a pour le rapport du diamètre primitif de référence des billes PCDB et du diamètre de bille DB

$$3,4 < PCDB / DB < 4,0.$$

**24.** Joint homocinétique selon l'une quelconque des revendications 1 à 11 et la revendication 12, **caractérisé en ce que** on a pour le rapport du diamètre primitif de référence des billes PCDB et du rayon primitif de référence PCDS de l'ouverture d'emboîtement de la partie intérieure de joint (15)

$$2,1 < PCDB / PCDS < 2,5.$$

**25.** Joint homocinétiques selon fun quelconque des revendications 1 à 11 et la revendication 12, **caractérisé en ce que** on a pour le rapport du diamétre primitif de référence des billes PCDB et du diamètre extérieur DCA de la cage à billes (16)

$$0,75 < PCDB / DCA < 1,05.$$

**26.** Joint homocinétique selon l'une quelconque des revendications 1 à 11 et la revendication 12, **caractérisé en ce que** on a pour le rapport du diamètre de cercle primitif PCDB et du diamètre intérieur DCI de la cage à billes (16)

$$0,85 < PCDB / DCI < 1,15.$$

**27.** Joint homocinétique selon l'une quelconque des revendications 1 à 11 et la revendication 12, **caractérisé en ce que** on a pour le rapport du diamètre de cercle primitif PCDB et de la largeur de nervure W périphérique de la cage à billes (15)

$$7,5 < PCDB / W < 11,5.$$

**28.** Joint homocinétique selon l'une quelconque des revendications 1 à 11 et la revendication 12, **caractérisé en ce que** on a pour le rapport du diamètre de cercle primitif PCDB et de la longueur périphérique L1 des premières fenêtres de cage (23)

$$2,8 < PCDB / L1 < 3,4.$$

**29.** Joint homocinétique selon l'une quelconque des revendications 1 à 11 et la revendication 12, **caractérisé en ce que** on a pour le rapport du diamètre de cercle primitif PCDB et de la longueur périphérique L2 des secondes fenêtres de cage (24)

$$2{,}6 < PCDB / L2 < 3{,}2.$$

30. Arbre de transmission comprenant deux joints homocinétiques et un arbre intermédiaire,
**caractérisé en ce que**
au moins l'un des joints homocinétiques (11, 31) est conçu selon l'une quelconque des revendications 1 à 29.

31. Arbre d'articulation selon la revendication 30,
**caractérisé en ce que**
l'arbre intermédiaire (35) comprend une unité de déplacement axial (28).

32. Véhicule comprenant au moins deux arbres d'articulation, qui comprennent chacun deux joints homocinétiques et un arbre intermédiaire et qui relient à chaque fois en tant qu'arbres latéraux un engrenage différentiel à une unité de moyeu de roue,
**caractérisé en ce que**
chaque fois au moins l'un des joints (11, 31) de chaque arbre de transmission est conçu selon l'une quelconque des revendications 1 à 29 et son tourillon d'arbre est emboîté dans l'engrenage différentiel (32).

33. Véhicule comprenant au moins deux arbres de transmission, lesquels comprennent chaque fois deux joints homocinétiques et un arbre intermédiaire et qui relient chaque fois en tant qu'arbres latéraux un engrenage différentiel à une unité de moyeu de roue,
**caractérisé en ce que**
chaque fois au moins l'un des joints (11, 31) de chaque arbre d'articulation est conçu selon l'une quelconque des revendications 1 à 29 et son pivot est emboîté dans l'unité de moyeu de roue (33).

a)

b)

a)

b)

c)

FIG. 2

FIG.3

FIG.4

$$10° \leq \alpha$$

$$\alpha \geq \beta + \arcsin\left[\frac{O_2}{R_2} \cdot \sin(\beta + 90°)\right]$$

FIG.5

$$\boxed{\alpha \leq 17°}$$

a)

b)

FIG.6

| $\alpha$ | 10° | 11° | 12° | 13° | 14° | 15° | 16° | 17° | 18° |
|---|---|---|---|---|---|---|---|---|---|
| $\varepsilon$ | ++ | ++ | ++ | ++ | ++ | + | + | – | –– |

FIG. 7

$$\alpha \geq \beta + \arcsin\left[\frac{O_2 + a \cdot \tan(\beta)}{R_2} \cdot \sin(\beta + 90°)\right]$$

FIG. 8

$$\alpha \geq \beta + \text{arcsin}\left[\frac{O_2 - b \cdot \tan(\beta)}{R_2} \cdot \sin(\beta + 90°)\right]$$

32

FIG.9

a)

A-A

b)

FIG. 10

a)

b)

FIG.11

A

$17_1$ $12$ $11$

$16$

$15$

a)

$17_2$

A

A-A $17_1$ E $18$ $12$

$L_{18}$

$15$ $19$

$A_{22}$

$25$ $A_{12}$

$16$ $21$

$L_{20}$ $14$

$13$

$20$

$17_2$

b)

FIG. 12

FIG.13

FIG.14

FIG. 15

A-A

B-B

a)

b)

c)

P08 631

FIG.16

$$10° \leq \alpha \leq 18°$$

| $\alpha$ | 10 ° | 11 ° | 12 ° | 13 ° | 14 ° | 15 ° | 16 ° | 17 ° | 18 ° |
|---|---|---|---|---|---|---|---|---|---|
| $\varepsilon$ | + + | + + | + + | + + | + + | + | + | − | − − |
| $\varepsilon'$ | − − | − | + | + + | + + | + + | + + | + + | + + |

FIG. 17

FIG. 18

A

A

11

α

O2

A-A

12

R1

R2

18

R3

OD

R5

R4

O5

20

α

A-A

R1'

R3' R2'

19

15

R5'

21

R4'

L

FIG. 19

FIG. 20

EP 1 807 634 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10220711 A1
- DE 10337612 A1
- DE 10060220 A1